(19) Europäisches Patentamt
European Patent Office
Office européen des brevets

(11) **EP 2 663 984 B1**

(12) **FASCICULE DE BREVET EUROPEEN**

(45) Date de publication et mention de la délivrance du brevet:
**15.07.2015 Bulletin 2015/29**

(21) Numéro de dépôt: **12701326.6**

(22) Date de dépôt: **13.01.2012**

(51) Int Cl.:
*H01G 11/26* (2013.01)   *H01G 11/04* (2013.01)
*H01G 11/08* (2013.01)   *H01G 11/22* (2013.01)
*H01G 11/52* (2013.01)   *H01G 11/76* (2013.01)
*H01G 9/008* (2006.01)   *H01G 9/02* (2006.01)
*H01G 9/04* (2006.01)    *H01G 9/26* (2006.01)
*H01M 2/26* (2006.01)    *H01M 10/04* (2006.01)
*H01M 10/052* (2010.01)

(86) Numéro de dépôt international:
**PCT/EP2012/050480**

(87) Numéro de publication internationale:
**WO 2012/095510 (19.07.2012 Gazette 2012/29)**

(54) **ENSEMBLE DE STOCKAGE D'ENERGIE ELECTRIQUE A ELEMENT EMPILE**

ANORDNUNG ZUR SPEICHERUNG ELEKTRISCHER ENERGIE MIT EINEM GESCHICHTETEM ELEMENT

ASSEMBLY INTENDED FOR STORING ELECTRICAL ENERGY AND HAVING A STACKED ELEMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.01.2011 FR 1150269**

(43) Date de publication de la demande:
**20.11.2013 Bulletin 2013/47**

(73) Titulaire: **Blue Solutions**
**29500 Ergué Gabéric (FR)**

(72) Inventeur: **AZAIS, Philippe**
**F-29000 Quimper (FR)**

(74) Mandataire: **Regimbeau**
**139, rue Vendôme**
**69477 Lyon Cedex 06 (FR)**

(56) Documents cités:
**US-A- 2 949 570        US-A- 4 638 402**
**US-A1- 2004 038 124    US-A1- 2008 166 637**
**US-A1- 2010 220 426**

## Description

La présente invention concerne le domaine technique général des ensembles de stockage d'énergie électrique.

On entend, dans le cadre de la présente invention, par « ensemble de stockage d'énergie électrique », un supercondensateur (i.e. un système comprenant au moins deux électrodes dont le matériau est de même nature -carbone activé, par exemple-, un électrolyte et au moins un séparateur) ou une batterie (i.e. un système comprenant au moins deux électrodes réalisées à partir de matériaux distincts , un électrolyte et au moins un séparateur) ou encore un condensateur électrolytique (i.e. un système comprenant au moins deux électrodes en aluminium, un électrolyte et au moins un séparateur)

## PRESENTATION GENERALE DE L'ART ANTERIEUR

On connaît différents types de supercondensateurs. Ces supercondensateurs sont destinés à être connectés les uns aux autres pour former des modules pour les raisons suivantes.

Deux structures différentes de supercondensateurs unitaires, de tension unitaire généralement inférieure à 3.0V et fonctionnant en milieu organique, sont généralement utilisées :

- les supercondensateurs cylindriques, réalisés à partir de bobinage simultané de 2 électrodes et de 2 séparateurs,
- les supercondensateurs prismatiques, réalisés à partir de couches successives empilées pour former un élément empilé, également connu sous le nom de *« stack »*. Dans ce cas, deux assemblages d'électrodes sont réalisés : l'un pour l'électrode positive et l'autre pour la négative.

Généralement, la conception des supercondensateurs cylindriques permet de réaliser un ensemble de stockage d'énergie électrique dont la résistance série est plus faible que celle des supercondensateurs prismatiques : les reprises de courant se font parfois directement par soudure laser sur le bobinage, comme décrit dans le document EP1964138, ce qui permet de réduire considérablement la résistance électrique de contact.

Cependant, les supercondensateurs cylindriques présentent un inconvénient : la densité d'énergie des modules obtenus par connexion électrique de plusieurs supercondensateurs cylindriques est plus faible que la densité d'énergie des modules obtenus par connexion électrique de plusieurs supercondensateurs prismatiques. En effet, les modules à base de supercondensateurs cylindriques sont moins compacts que les modules à base de supercondensateurs prismatiques du fait de la présence d'un volume mort entre deux supercondensateurs cylindriques adjacents.

Or, le module constitue l'unité de base dans les applications. Effectivement, un supercondensateur unitaire ne peut être utilisé seul en raison de sa tension peu élevée (généralement 2.7V ou 2.8V).

L'intérêt d'un supercondensateur prismatique est sa densité d'énergie volumique.

Cependant, la résistance série des supercondensateurs prismatiques est généralement très supérieure à celle des supercondensateurs cylindriques en raison du type de reprise de courant qui est réalisé par un montage vissé, donc coûteux en main d'oeuvre et en pièces.

Cette forte résistance série constitue l'inconvénient majeur pour la technologie, car elle implique des échauffements très importants (effet Joule) qui entraîne un vieillissement accéléré des modules.

Le tableau II en annexe présente les valeurs de densités d'énergie massique et gravimétrique :

- d'une part d'un supercondensateur prismatique et d'un module à base de ce supercondensateur prismatique,
- d'un supercondensateur cylindrique et d'un module à base de ce supercondensateur cylindrique.

On constate dans le tableau I que la résistance série d'un module à base de supercondensateurs prismatiques est 25% plus élevée que celle d'un module à base de supercondensateurs cylindriques. On constate également que la densité d'énergie massique d'un module à base de supercondensateurs prismatiques est 25% plus élevée que celle d'un module à base de supercondensateurs cylindriques.

Le tableau I montre également que les supercondensateurs prismatiques, du fait de leur complexité de montage, présentent un nombre généralement plus important de pièces qu'un supercondensateur cylindrique.

Les problèmes inhérents au montage en module de supercondensateurs prismatiques sont donc l'ajout de nombreuses pièces (calage, tapis thermique, ...), une main d'oeuvre importante, une masse de composants inactifs très importante (généralement au moins 50% de la masse). Enfin, l'assemblage de composants nécessite l'utilisation de soudure entre les composants au moyen de barrettes. Pour résister aux essais vibratoires, il est donc important de réaliser une structure robuste et donc très généralement massive.

Les supercondensateurs cylindriques et prismatiques présentent donc chacun des avantages et des inconvénients.

Qu'il soit cylindrique ou prismatique, la tension d'un supercondensateur fonctionnant en milieu électrolytique

organique - tel que TEABF$_4$ dans l'acétonitrile - est limitée autour de 6V pour les électrolytes organiques et de l'ordre de 1V pour les électrolytes aqueux (*référence :* « Electrochemical Properties of Organic Liquid Electrolytes Based on Quaternary Onium Salts for Electrical Double-Layer Capacitors" Makoto Ue, Kazuhiko Ida, and Shoichiro Mori, J. Electrochem. Soc., Vol. 141, No. 11, 1994).

Au-delà de cette tension, on observe une dégradation totale de l'électrolyte (solvant et sel). En outre, plus la tension de fonctionnement d'un supercondensateur est élevée, plus la dégradation de l'électrolyte est rapide et donc plus la durée de vie du supercondensateur est courte.

Pour cette raison, les fabricants de supercondensateurs réalisent des supercondensateurs dont la tension nominale est limitée à 2.7V voire 2.8V, pour les électrolytes organiques. Cette tension est un compromis entre la durée de vie et les performances énergétiques du supercondensateur.

L'énergie d'un supercondensateur est directement liée à la tension via la formule :

$$E = \tfrac{1}{2}\, C.\, U^2,$$

où E représente l'énergie du supercondensateur, C représente la capacité du supercondensateur et U représente la tension du supercondensateur.

Un supercondensateur unitaire présente donc une faible tension de fonctionnement. C'est pourquoi un supercondensateur unitaire ne peut être utilisé seul dans la très grande majorité des applications.

Comme rappelé ci-dessus, les supercondensateurs sont donc généralement assemblés de sorte à former un module fonctionnant à haute tension - la tension d'utilisation du module étant égale à la somme des tensions nominales des supercondensateurs lorsque ceux-ci sont montés en série. Généralement, le dimensionnement des applications impose des tensions minimale et maximale de fonctionnement ainsi qu'une énergie nécessaire. De ces paramètres, il découle le nombre de composants nécessaire pour atteindre la tension et la capacité totale du module. Par voie de conséquence, la capacité unitaire de chaque composant est calculée puis chaque supercondensateur est dimensionné en fonction. Mais, selon les applications, les paramètres de tension et d'énergie, et, de fait, le dimensionnement du supercondensateur varie. Cela présente un inconvénient majeur pour le fabricant de ne pas pouvoir utiliser un même supercondensateur quelle que soit l'application.

Le document US 2008/166637 décrit une batterie à électrolyte non aqueux comprenant des complexes empilés, un séparateur et des électrodes positives et négatives pour relier électriquement la batterie à un générateur.

Le document US 2010/220426 décrit un composant électronique céramique laminé comprenant des premières électrodes internes s'étendant sur une première surface d'extrémité, et une pluralité de secondes électrodes internes s'étendant jusqu'à une seconde surface d'extrémité.

Un but de la présente invention est de proposer un supercondensateur prismatique dont la tension de fonctionnement est plus élevée que les supercondensateurs prismatiques existants, pour permettre la réalisation de modules fonctionnant sous haute tension.

Un autre but de la présente invention est de proposer un supercondensateur prismatique dont la résistance série est inférieure à celle des supercondensateurs prismatiques existants.

## PRESENTATION DE L'INVENTION

A cet effet on propose un ensemble de stockage d'énergie électrique comprenant :

- au moins trois complexes empilés, comprenant chacun au moins une électrode,
- au moins un séparateur, le ou les séparateurs étant agencés de sorte que ledit au moins un séparateur soit disposé entre chaque paire de complexes adjacents,
- deux bornes de connexion pour relier électriquement l'ensemble à un générateur de tension, un premier échantillon de complexes étant relié électriquement à ou formant une des deux bornes et un deuxième échantillon de complexes étant relié électriquement à ou formant l'autre des deux bornes, les deux échantillons étant choisis de sorte que le nombre de complexes appartenant à la réunion des deux échantillons est inférieur au nombre total de complexes et que l'intersection des deux échantillons est un ensemble vide.

On entend, dans le cadre de la présente invention par « complexes empilés » des complexes au moins partiellement superposés les uns sur les autres. On notera que des complexes enroulés ensemble en spires pour obtenir un élément bobiné ne sont pas considérés comme des complexes empilés dans le cadre de la présente invention.

Par exemple, chacun des complexes situés à une extrémité de l'empilement est relié à ou forme une des bornes de connexion, chacun étant notamment relié à ou formant une borne de connexion distincte. Un tel ensemble de stockage comprend en fait au moins un complexe distinct relié à chaque borne respective de l'ensemble et au moins un complexe qui n'est relié à aucune des bornes de l'ensemble et dont le potentiel n'est donc pas imposé par l'une de ces bornes.

Un tel ensemble de stockage d'énergie permet de supporter une tension plus élevée qu'un ensemble selon l'état de la technique. En effet, dans l'ensemble selon l'invention, seuls certains des complexes, formant chacun une borne de deux éléments unitaires adjacents (chaque élément unitaire étant constitué par deux complexes et formant un condensateur, un supercondensateur ou une batterie), sont reliés à un générateur extérieur. Les autres complexes sont disposés en « flottant », c'est-à-dire non reliés vers l'extérieur.

Les éléments unitaires de l'ensemble se comportent comme s'ils étaient en série. Ainsi, lorsque les complexes reliés électriquement à l'extérieur de l'ensemble sont bien choisis, par exemple qu'ils se trouvent aux extrémités de l'empilement, la tension du générateur externe n'est pas délivrée à chaque élément unitaire, comme c'est le cas dans l'état de la technique, mais à un ensemble d'éléments unitaires en série, i.e. ceux situés entre les deux complexes reliés vers l'extérieur. La tension unitaire appliquée à chaque élément unitaire est donc égale à la tension appliquée aux bornes de l'ensemble divisée par le nombre d'éléments unitaires entre les deux complexes reliés.

Ainsi, on peut éviter la dégradation de l'électrolyte, quelle que soit la tension appliquée aux bornes de l'ensemble, si le nombre d'éléments unitaires est judicieusement choisi pour que la tension locale soit suffisamment faible pour que l'électrolyte ne se dégrade pas. De ce fait, grâce à l'invention, il est facile de créer un ensemble de stockage d'énergie de fonctionnement fiable, même s'il est soumis à une haute tension. Un tel ensemble est en outre de conception simple, d'encombrement réduit et permet de s'affranchir d'éléments de connectique tels que barrettes de liaison ou carte d'équilibrage, ce qui permet de diminuer les coûts de fabrication de l'ensemble.

Il permet également d'obtenir un module ayant une grande capacité et une faible résistance. En effet, chaque ensemble fonctionnant à la tension que l'on souhaite appliquer à l'application, il est possible d'agencer différents ensemble en parallèle et non en série, ce qui permet d'additionner les capacités des différents ensembles et non d'obtenir une capacité totale des ensembles inférieure à la capacité de chaque ensemble, comme c'est le cas lorsque les ensembles sont connectés en série. En revanche, du fait de cet assemblage en parallèle, la résistance totale des ensembles est inférieure à la résistance de chaque ensemble, ce qui est avantageux pour éviter notamment la surchauffe du module.

Ainsi, l'ensemble selon l'invention permet d'obtenir des supercondensateurs présentant de bonnes propriétés électriques tout en étant peu coûteux et simple à fabriquer. L'ensemble de stockage d'énergie électrique peut également comprendre un logement destiné à recevoir l'empilement formé des complexes et du (ou des) séparateur(s), le logement contenant un électrolyte pour l'imprégnation des complexes. Ce logement est avantageusement constitué d'un unique compartiment. Ainsi, les complexes ne sont pas placés chacun dans un compartiment respectif mais sont placés dans un unique compartiment.

Des aspects préférés mais non limitatifs de l'ensemble de stockage d'énergie selon l'invention sont les suivants :

- l'ensemble comprend au moins un complexe incluant un collecteur de courant,
- l'ensemble comprend également deux électrodes opposées de part et d'autre du collecteur de courant. L'une des deux électrodes peut présenter une épaisseur plus importante que l'autre des électrodes. Les deux électrodes peuvent également présenter une composition distincte. Cela permet d'optimiser les propriétés de l'ensemble,
- au moins un, de préférence chaque, complexe situé à une extrémité de l'empilement est constitué d'un collecteur de courant et d'une unique électrode sur sa face en regard du reste de l'empilement,
- la structure de l'ensemble est telle que :

   ◦ le séparateur s'étend en accordéon et comprend une pluralité de pans, deux pans adjacents étant reliés au niveau d'une ligne de pliure pour former un pli présentant un côté concave et un côté convexe,
   ◦ au moins un des complexes formant un premier complexe s'étendant en chevron et étant positionné sur une première face du séparateur, chaque premier complexe étant plié le long d'une ligne de pliure et étant disposé sur un côté convexe respectif de la première face du séparateur de sorte que la ligne de pliure de chaque premier complexe coïncide avec une ligne de pliure respective du séparateur,
   ◦ au moins un autre des complexes formant un deuxième complexe s'étendant en chevron et étant positionné sur une deuxième face du séparateur, chaque deuxième complexe étant plié le long d'une ligne de pliure et étant disposé sur un côté convexe respectif de la deuxième face du séparateur de sorte que la ligne de pliure de chaque deuxième complexe coïncide avec une ligne de pliure respective du séparateur,

- l'ensemble peut alors comprendre une pluralité de premiers complexes sur la première face du séparateur, les premiers complexes étant positionnés un côté convexe sur deux, et une pluralité de deuxièmes complexe sur la deuxième face du séparateur, les deuxièmes complexes étant positionnés un côté convexe sur deux,
- les lignes de pliure du séparateur peuvent former les côtés de l'empilement, un pan d'un premier complexe formant le dessus de l'empilement et un pan d'un deuxième complexe formant le dessous de l'empilement,
- l'ensemble comprend au moins une borne de mesure pour mesurer la tension entre une borne de connexion et la borne de mesure, un complexe n'appartenant ni au premier ni au deuxième échantillon étant relié à ou formant la borne de mesure,

- dans un mode de réalisation, l'ensemble comprend en outre un logement destiné à recevoir l'empilement, et deux couvercles destinés à coiffer le logement et formant bornes de connexion de l'ensemble, le complexe situé à une extrémité de l'empilement appartenant au premier échantillon et étant relié électriquement au premier couvercle, de préférence sur toute sa surface, et le complexe situé à l'autre extrémité de l'empilement appartenant au deuxième échantillon et étant relié électriquement au deuxième couvercle, de préférence sur toute sa surface,
- dans un autre mode de réalisation, le logement est réalisé dans un matériau souple, les complexes appartenant aux premier et deuxième échantillons comprenant une portion, constituée notamment par une portion du collecteur, s'étendant à l'extérieur du logement souple, de sorte que les portions des complexes d'un même échantillon forment une borne de connexion de l'ensemble,
- au moins un séparateur est d'un seul tenant avec un complexe, de préférence un séparateur plié est d'un seul tenant avec un complexe de façon à recouvrir les deux faces opposées de ce complexe,
- l'ensemble comprend une électrolyte organique, telle que le tétraéthylammonium difluoromono[1,2-oxalato(2-)-o,o']borat(1-), (ou TEABF$_2$Ox), le nombre de complexes et la répartition des complexes des premier et deuxième échantillons étant choisis de sorte que la tension locale entre toute paire de complexes adjacents de l'ensemble soit inférieure à 6V, de préférence 3V.
- l'ensemble comprend une électrolyte aqueuse, telle que la potasse, la soude, l'acide sulfurique, le nitrate de sodium, le sulfate de sodium, le nitrate de lithium, le sulfate de lithium , le nombre de complexes et la répartition des complexes des premier et deuxième échantillons étant choisis de sorte que la tension entre toute paire de complexes adjacents de l'ensemble soit inférieure à 2V, de préférence 1V.

L'invention concerne également un module comprenant un boîtier comprenant au moins un ensemble selon l'invention.

Des aspects préférés mais non limitatifs du module selon l'invention sont les suivants :

- le module comprend une pluralité d'ensembles, lesdits ensembles étant reliés électriquement en parallèle,
- chaque ensemble comprenant des première et deuxième bornes de connexion débordant d'un logement souple contenant un empilement, les ensembles étant superposés et fixés ensemble pour former un bloc, les ensembles étant agencés de sorte que les premières bornes de connexion soient reliées électriquement ensemble, notamment par l'intermédiaire d'une première plaque métallique, et les deuxièmes bornes de connexion soient reliées électriquement ensemble, notamment par l'intermédiaire d'une deuxième plaque métallique,
- les bornes de connexion des ensembles sont couchées et assemblées directement sur les plaques métalliques,
- les plaques métalliques comprennent des rainures,
- chaque plaque métallique comprend un pion, positionné de préférence au centre de la plaque, les pions permettant de connecter électriquement le module à un organe électrique externe,
- au moins un interstice est disposé entre deux ensembles adjacents.

## PRESENTATION DES FIGURES

D'autres caractéristiques, buts et avantages de la présente invention ressortiront encore de la description qui suit, laquelle est purement illustrative et non limitative et doit être lue en regard des dessins annexés sur lesquels :

- les figures 1, 2, 3, 4a, 4b, 5, 6a, 6b, 7a, 7b, 7c, 8 et 9 illustrent schématiquement différents modes de réalisation d'un ensemble de stockage d'énergie selon l'invention ;
- la figure 10 illustre schématiquement un coeur de module utilisant des ensembles constitués par des supercondensateurs cylindriques de l'art antérieur
- les figures 11 à 16 illustrent différents modes de réalisation d'un module utilisant des ensembles selon l'invention.

## DESCRIPTION DE L'INVENTION

Pour mieux comprendre l'invention, un bref rappel du principe de fonctionnement d'un supercondensateur va être décrit.

## *Principe de fonctionnement des supercondensateurs*

Un supercondensateur est classiquement constitué de deux complexes 1, 2, d'un séparateur 3 entre les deux complexes 1, 2 et d'un électrolyte.

Le séparateur 3 est constitué dans un matériau isolant électriquement.

L'electrolyte peut être un milieu aqueux ou un milieu organique. Dans tous les cas, l'électrolyte comprend des ions et est électriquement conducteur. Un exemple d'électrolyte pertinent est le tétraéthylammonium difluoromono[1,2-oxalato(2-)-o,o']borat(1-), (ou [TEABF$_2$Ox]).

Chaque complexe 1, 2 comprend un collecteur de courant 11, 21 et au moins une électrode 12, 13, 22, 23.

Chaque électrode 12, 13, 22, 23 est réalisée à partir de carbone activé, d'un additif conducteur et d'un (ou plusieurs) polymère(s) permettant de lier les deux précédents constituants. Cette électrode 12, 13, 22, 23 est ensuite enduite ou extrudée sur le collecteur de courant 11, 21. Elle constitue la matière active du complexe 1, 2.

Le matériau constituant le collecteur de courant 11, 21 est par exemple de l'aluminium, du nickel, du cuivre ou de l'acier inoxydable. Le matériau du collecteur de courant 11, 21 est choisi pour son inertie chimique et électrochimique vis-à-vis des constituants de l'électrode 12, 13, 22, et 23 de l'électrolyte.

La distance entre les électrodes 12, 22, 13, 23 est généralement de l'ordre de quelques dizaines de micromètres (généralement entre 15 et 45$\mu$m), c'est-à-dire plus de 10 000 fois plus importante que la taille des ions. Ceci permet de garantir qu'un ion ne peut donc être simultanément en contact avec les deux électrodes 12, 22, 13, 23.

Dans un supercondensateur, le stockage d'énergie électrique se fait par déplacement d'ions au sein de la porosité du carbone activé constituant les électrodes. La taille des ions est de l'ordre de 0.3 à 0.7 nm ([B.E. Conway, R.E. Verall, J.E. Desnoyers, Trans. Faraday Soc. 62, pp 2738-2744, 1966] - [R.A. Robinson, R.H. Stokes, Electrolyte Solutions, 2ème édition, Butterworths, London, 1965] - [W.G. Pell, B.E. Conway, N. Marincic, J. Electroanal. Chemistry 491, pp 9-21, 2000] - [M. Endo, Y. J. Kim, H. Ohta, K. Ishii, T. Inoue, T. Hayashi, Y. Nishimura, T. Maeda, M. S. Dresselhaus, Carbon 40, pp 2613-2626, 2002]).

Lorsqu'une tension est appliquée aux bornes d'un supercondensateur, celle-ci génère un champ électrique. Sous l'effet de ce champ électrique et électrostatique, les ions positifs (par exemple TEA$^+$) vont préférentiellement se déplacer vers l'électrode négative, et les ions négatifs (par exemple BF$_4^-$) vont se déplacer vers l'électrode positive.

Il en résulte que la capacité totale équivalente du composant vaut $(C_+ \times C_-) / (C_+ + C_-)$. Si $C_+$ et $C_-$ sont du même ordre, la capacité totale équivalente est C / 2.

La dégradation totale de l'électrolyte ne se fait qu'à partir du moment où la tension entre les deux électrodes de signes opposées est de l'ordre de 6V pour les électrolytes organiques et de l'ordre de 1V pour les électrolytes aqueux. En limitant très fortement la tension entre les électrodes de signes opposées, on limite le vieillissement du supercondensateur.

Un but de l'invention est de permettre d'augmenter la tension aux bornes d'un supercondensateur sans en accélérer le vieillissement.

Une solution à ce problème est de réaliser un supercondensateur comprenant un empilement d'électrodes 12, 22, 13, 23 de signes opposées, et dont seules les électrodes positionnées aux extrémités de l'empilement sont électriquement connectées vers l'extérieur du supercondensateur. Les autres électrodes du supercondensateur sont donc positionnées « en flottant », c'est-à-dire non reliées vers l'extérieur.

### *Description du supercondensateur selon l'invention*

On va maintenant décrire différents modes de réalisation de l'ensemble de stockage selon l'invention en référence aux figures. Dans ces différentes figures, les éléments équivalents de l'ensemble de stockage portent les mêmes références numériques.

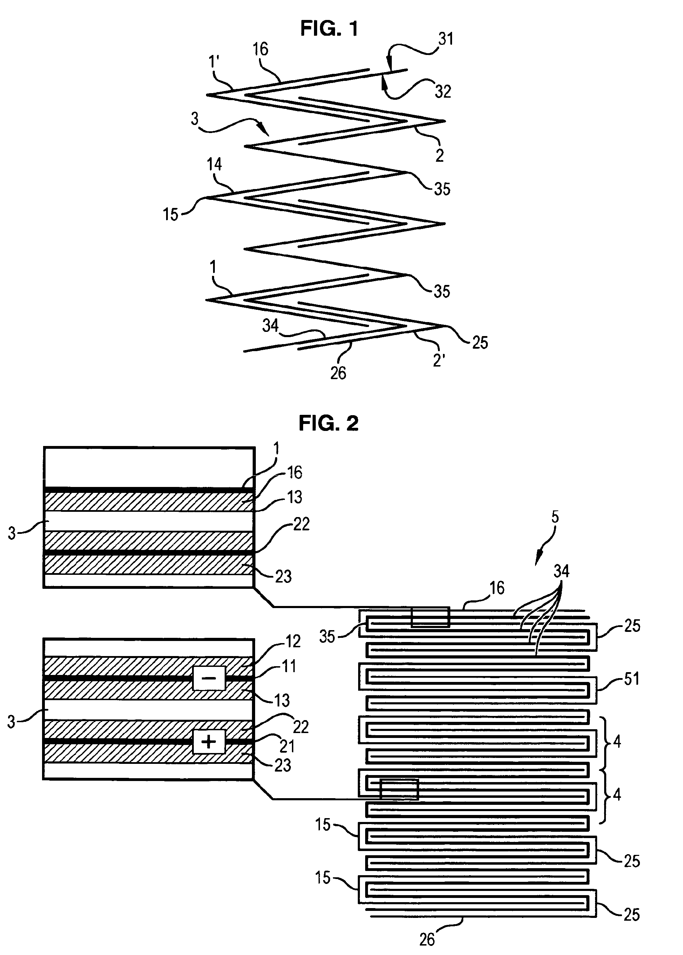

En référence aux figures 1 à 3, l'ensemble de stockage comprend :

- un séparateur 3 présentant deux faces 31, 32 : une première face 31 et une deuxième face 32 opposée à la première face 31,
- une pluralité de premiers complexes 1 disposés sur la première face 31 du séparateur 3, et
- une pluralité de deuxièmes complexes 2 disposés sur la deuxième face 32 du séparateur 3.

Le séparateur 3 est en un matériau isolant électriquement. Le séparateur 3 s'étend entre les premiers et deuxièmes complexes 1, 2. Il permet d'assurer l'isolation électrique entre les premiers complexes 1 et les deuxièmes complexes 2.

Dans le mode de réalisation illustré à la figure 2, chaque complexe 1, 2 comprend un collecteur de courant 11, 21 sensiblement plan et deux électrodes opposées 12, 13 et 22, 23 de part et d'autre du collecteur de courant 11, 21. Chaque électrode 12, 13 et 22, 23 a une face conductrice électriquement en commun avec une face respective du collecteur de courant 11, 21. Ainsi, chaque face d'un complexe 1, 2 comprend une électrode respective : cela permet d'accroitre la densité d'énergie du supercondensateur.

La structure du supercondensateur des figures 1 à 3 est la suivante.

Le séparateur 3 s'étend à la façon d'un accordéon : il comprend au moins trois pans 34, deux pans adjacents étant reliés au niveau d'une ligne de pliure 35 pour former un pli présentant un côté concave et un côté convexe.

Chaque premier complexe 1 s'étend à la façon d'un chevron : il comprend deux pans uniques 14 reliés le long d'une ligne de pliure 15 pour former un pli de complexe présentant un côté concave et un côté convexe. Le côté concave de chaque premier complexe 1 est destiné à venir en regard d'un côté convexe respectif de la première face 31 du séparateur 3.

De même, chaque deuxième complexe 2 s'étend à la façon d'un chevron et présente un côté concave et un côté convexe. Ici encore, le côté concave de chaque deuxième complexe 2 est destiné à venir en regard d'un côté convexe respectif de la deuxième face 32 du séparateur 3.

Chaque premier complexe 1 fait face à un deuxième complexe 2 pour former un élément unitaire 4. Les premier et deuxième complexes d'un élément unitaire 4 sont décalés d'un pan 34 de séparateur 3 l'un par rapport à l'autre. En d'autre termes, chaque premier complexe 1 est plié le long d'une ligne de pliure 15 et est disposé sur un côté convexe respectif de la première face 31 du séparateur 3 de sorte que la ligne de pliure 15 de chaque premier complexe 1 coïncide avec une ligne de pliure 35 respective du séparateur 3. De même, chaque deuxième complexe 2 est plié le long d'une ligne de pliure 25 et est disposé sur un côté convexe respectif de la deuxième face 32 du séparateur 3 de sorte que la ligne de pliure 25 de chaque deuxième complexe 2 coïncide avec une ligne de pliure 35 respective du séparateur.

Le supercondensateur final peut être constitué de plusieurs éléments unitaires 4 disposés en série et séparés deux à deux par un pan de séparateur pour former un empilement 5.

Les lignes de pliure 35 du séparateur 3 forment les côtés 51 de l'empilement 5. Un pan 16 d'un premier complexe 1' est situé à une première extrémité de l'empilement de façon à former le dessus de l'empilement 5 et un pan 26 d'un deuxième complexe 2' est situé à une deuxième extrémité de l'empilement de façon à former le dessous de l'empilement 5.

Le premier complexe 1' situé à la première extrémité de l'empilement 5 est destiné à être connecté électriquement à une (ou à former une) première borne de connexion de l'ensemble de stockage. Le deuxième complexe 2' situé à la deuxième extrémité de l'empilement 5 est destiné à être connecté électriquement à une (ou à former une) deuxième borne de connexion de l'ensemble de stockage.

Le premier complexe 1' constitue un premier échantillon de complexes. Le deuxième complexe 2' constitue un deuxième échantillon de complexes. On entend, dans le cadre de la présente invention, par « premier échantillon de complexes » (respectivement « deuxième échantillon de complexes ») un groupe de complexes destinés à être connecté électriquement à la (ou à former la) première (respectivement deuxième) borne de connexion de l'ensemble de stockage.

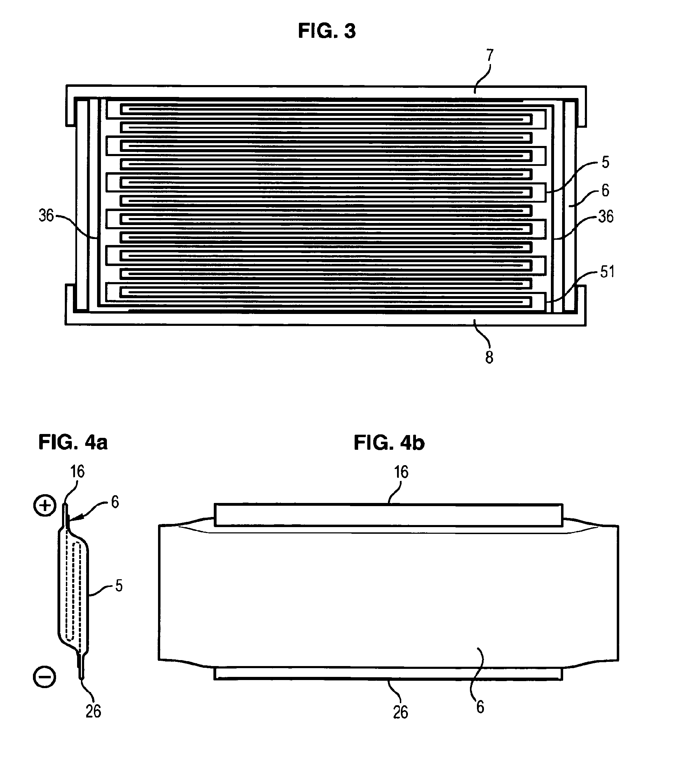

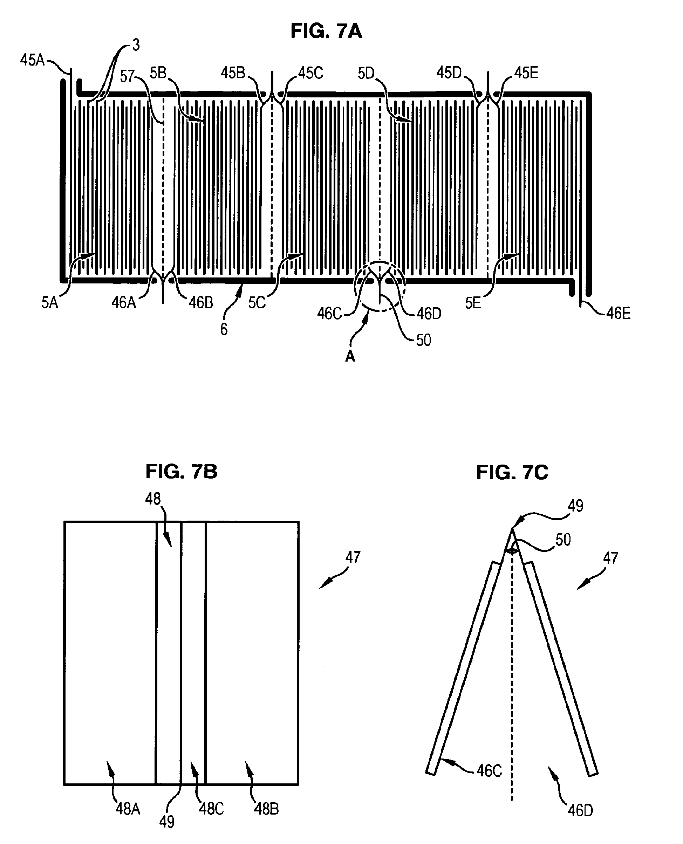

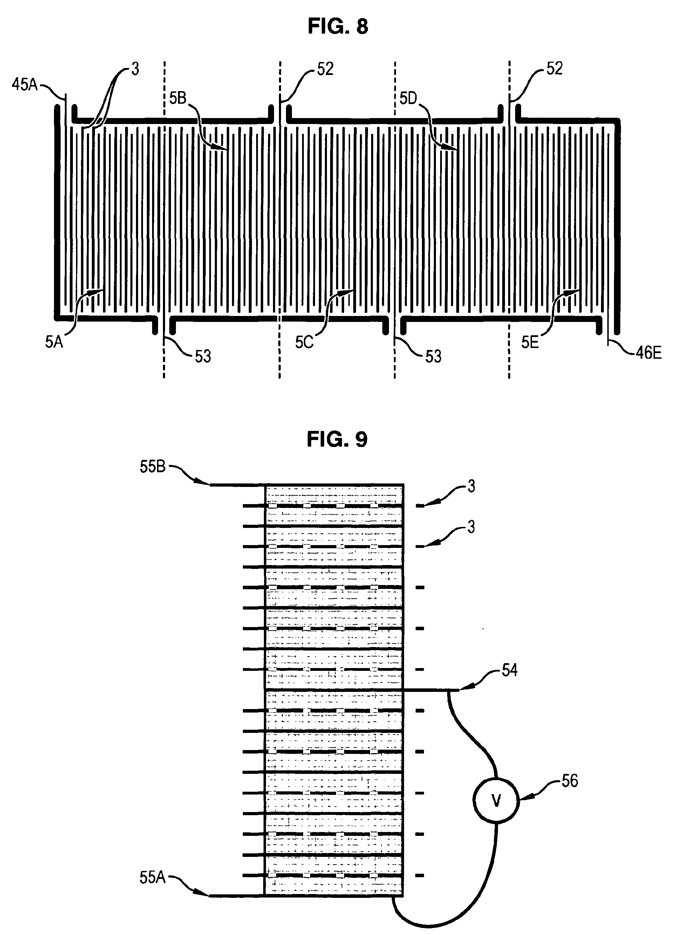

Dans le mode de réalisation illustré aux figures 1 à 3, chaque échantillon de complexes comprend un unique complexe. Toutefois, chaque échantillon de complexes peut comprendre plusieurs complexes. Par exemple en référence aux figures 7 et 8, chaque échantillon de complexes comprend une pluralité de complexes, par exemple 5 dans le mode de réalisation de la figure 7 et 3 dans le mode de réalisation de la figure 8.

Le lecteur appréciera que le nombre de complexes appartenant à la réunion des deux échantillons est inférieur au nombre total de complexes et l'intersection des deux échantillons est un ensemble vide.

En d'autres termes :

- au moins un complexe de l'ensemble de stockage n'appartient ni au premier ni au deuxième échantillon de complexes (i.e. le nombre de complexes appartenant à la réunion des deux échantillons est inférieur au nombre total de complexes), et
- un complexe appartenant au premier échantillon de complexes ne peut pas appartenir au deuxième échantillon de complexes (i.e. l'intersection des deux échantillons est un ensemble vide).

Cela signifie :

- d'une part que l'empilement 5 comprend au moins un complexe qui n'est connecté électriquement ni à la première borne, ni à la deuxième borne de l'ensemble de stockage, et
- d'autre part qu'un complexe relié à la première (respectivement la deuxième) borne de l'ensemble de stockage ne peut pas être relié à la deuxième (respectivement première) borne.

L'empilement 5 est disposé dans un logement 6, montré sur la figure 3. Le logement est constitué d'un unique compartiment destiné à recevoir tous les complexes. Ce logement contient un électrolyte qui imprègne tous les éléments de l'empilement.

Ce logement 6 peut être rigide et de forme par exemple parallélépipédique, comme illustré à la figure 3. Dans ce cas, des couvercles supérieur et inférieur 7, 8 permettent de coiffer le logement 6. L'empilement 5 est par ailleurs imprégné d'un milieu organique ou aqueux constituant l'électrolyte du supercondensateur. Le pan 16 du premier complexe 1' formant le dessus de l'élément empilé 5 est connecté électriquement au couvercle supérieur 7 sur toute sa surface. Le pan 26 du deuxième complexe 2' formant le dessous de l'élément empilé 5 est connecté électriquement au couvercle inférieur 8 sur toute sa surface. Dans le cas de l'utilisation d'un collecteur 11, 21 en aluminium, le couvercle supérieur 7 (respectivement inférieur 8) du supercondensateur peut être directement soudé, brasé ou soudé par brasage-diffusion au gallium sur l'ensemble de la surface du pan 16 (respectivement pan 26) du premier complexe 1' (respectivement deuxième 2') formant le dessus (respectivement dessous) de l'empilement 5. Ceci permet de maximiser la surface de contact entre chaque couvercle 7, 8 et l'élément empilé 5 et donc de minimiser la résistance électrique du supercondensateur. Les couvercles 7,8 forment les bornes de connexion du supercondensateur.

Le fait que seuls deux complexes 1', 2' de l'élément empilé 5 débordent du séparateur 3 et soient connectés électriquement aux couvercles supérieur et inférieur 7,8, les autres complexes étant « en flottant », permet de diminuer les risques de court-circuit entre les différents complexes 1, 2 de l'élément empilé 5 et surtout d'appliquer une tension importante aux bornes du supercondensateur sans pour autant dégrader l'électrolyte, comme expliqué plus haut.

Avantageusement, le séparateur 3 peut être prévu suffisamment long pour que les portions d'extrémité 36 de celui-ci soient repliée de sorte à recouvrir les côtés de l'empilement 5 comprenant les lignes de pliures 35 afin de « napper » (ou fretter) l'élément empilé 5, comme cela est visible sur la figure 3.

Dans certains modes de réalisation, le pan 16 du premier complexe 1' formant le dessus de l'empilement 5 est dépourvu d'électrode sur sa face en regard du couvercle 7. Ceci permet d'une part de faciliter la connexion électrique du couvercle supérieur 7 au premier complexe 1' formant le dessus de l'élément empilé 5, et d'autre part de réduire la résistance électrique entre le couvercle 7 et le complexe 1'. De même, le pan 26 du deuxième complexe 2' formant le dessous de l'empilement 5 peut être dépourvu d'électrode sur sa face en regard du deuxième couvercle 8.

Un avantage de la structure du supercondensateur illustré aux figures 1 à 3 est l'utilisation d'un seul séparateur 3. Ceci permet de simplifier le procédé de fabrication du supercondensateur. Par ailleurs, l'utilisation d'un unique séparateur 3 permet d'éviter les courts-circuits entre électrode et facilite le calage (i.e. l'ajustement) des électrodes en vis-à-vis. Enfin, l'utilisation d'un unique séparateur 3 permet d'augmenter la résistance mécanique du supercondensateur, le séparateur 3 formant le squelette du supercondensateur et lui apportant une certaine rigidité.

La structure du supercondensateur prismatique selon l'invention permet de faire varier la tension aux bornes du supercondensateur en fonction du nombre d'électrodes constituant l'élément empilé 5 du supercondensateur, comme expliqué plus haut.

En outre, la structure du supercondensateur prismatique permet de ne par créer de courant induit parasite, car les supercondensateurs réalisés ne sont pas bobinés, contrairement aux supercondensateurs cylindriques.

L'utilisation de supercondensateurs selon l'invention dans des modules permet également de supprimer la carte d'équilibrage du module. La tension de fonctionnement entre deux électrodes unitaires du supercondensateur peut être choisie pour être suffisamment faible afin d'éviter le vieillissement. Par exemple, on peut choisir de maintenir une tension égale à 2.3V entre deux électrodes en regard du supercondensateur. De ce fait, la génération de gaz est très fortement limitée et la réalisation du module ne nécessite pas de composant très rigide en vue de résister à l'accroissement de pression interne.

Le supercondensateur pouvant être dimensionné pour que la tension entre ses bornes soit égale à la tension désirée dans l'application visée, il est possible de réaliser des modules dans lesquels les supercondensateurs sont montés en parallèle, ce qui est très avantageux à la fois pour la capacité et la résistance totale du module.

On a illustré aux figures 4a et 4b un autre mode de réalisation du supercondensateur selon l'invention. Dans ce mode de réalisation, le logement 6 contenant l'empilement 5 est réalisé en un matériau souple étanche au gaz et à l'électrolyte.

Par exemple, le logement 6 peut être constitué d'une (ou plusieurs) feuille(s) étanche(s) thermo-soudable (aluminisée(s) ou non), repliée(s) sur elle(s)-même ou non. Les caractéristiques détaillées d'un tel logement sont notamment décrites dans le document US 4 092 464. Un tel logement est notamment déjà utilisé dans l'industrie pour recevoir des batteries lithium-ion et lithium-polymère dédiées aux applications portables (téléphones portables, PDA, GPS, etc.).

Avantageusement, une portion du pan 16 du premier complexe 1' formant le dessus de l'élément empilé 5 fait saillie à l'extérieur du logement 6. Cette portion du pan 16 sert de première borne de connexion électrique au supercondensateur. De même, une portion du pan 26 du deuxième complexe 2' formant le dessous de l'élément empilé 5 fait saillie à l'extérieur du logement 6. Cette portion 26 sert de deuxième borne de connexion électrique au supercondensateur. Ces bornes de connexion permettent par exemple de connecter électriquement le supercondensateur à un autre supercondensateur.

Dans ce mode de réalisation, les pans 16, 26 des premier et deuxième complexes 1', 2' formant le dessus et le dessous de l'élément empilé 5 comprennent une unique électrode située en regard du reste de l'empilement, notamment de l'électrode adjacente. En outre, le collecteur de chaque pan 16, 26 se prolonge de façon à faire saillie du logement 6, la portion du collecteur faisant saillie du logement étant dépourvue d'électrode.

Dans le mode de réalisation illustré aux figures 4a et 4b, les bornes de connexions 16, 26 sont positionnées sur deux côtés opposés du logement 6. L'homme du métier aura compris que ces bornes de connexion 16, 26 peuvent s'étendre du même côté du logement 6 ou sur des côtés adjacents du logement 6, et prolonger le logement dans sa longueur ou dans sa largeur.

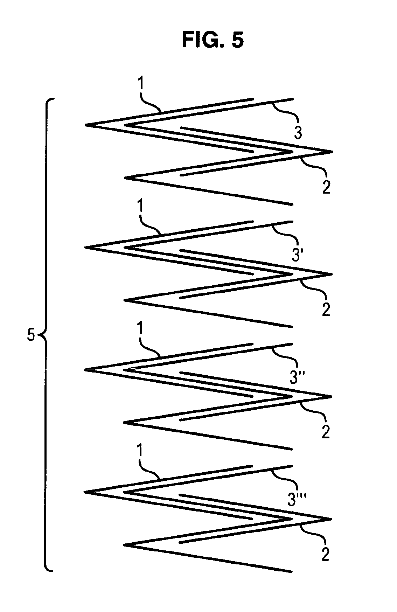

On a illustré à la figure 5 une variante de réalisation du supercondensateur selon l'invention. Dans cette variante, le supercondensateur comprend plusieurs séparateurs 3, 3', 3", 3"'.

Tout comme le mode de réalisation illustré aux figures 1 à 3, chaque séparateur 3, 3', 3", 3"' est plié à la façon d'un accordéon, et comprend sur chacune de ses faces, des premiers et deuxièmes complexes 1, 2, chaque complexe 1, 2 étant plié à la façon d'un chevron. Les premiers et deuxièmes complexes 1, 2 associés à chaque séparateur 3, 3', 3", 3"' sont décalés les uns par rapport aux autres d'un pas égal à un pan de séparateur 3, 3', 3", 3"'.

Les différents séparateurs 3, 3', 3", 3"' et leurs complexes associés 1, 2 sont empilés les uns sur les autres pour former l'empilement 5. Ce mode de réalisation permet, à partir de séparateurs de longueur finie, de réaliser un élément empilé quelque soit sa hauteur désirée.

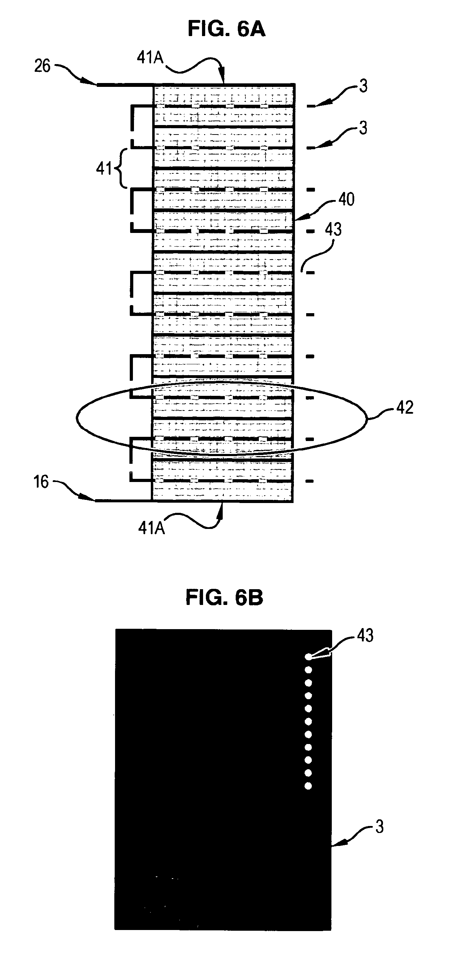

Dans un troisième mode de réalisation, représenté à la figure 6a, chaque séparateur est d'un seul tenant avec un complexe. Le séparateur 3 est plus précisément plié sur un complexe 40 de façon à recouvrir les deux faces opposées de ce complexe. L'empilement consiste alors en une alternance de complexes 40 comprenant un séparateur 3 intégré et de complexes 41 dépourvus de séparateurs.

### *Fabrication d'un ensemble selon l'invention*

On va maintenant décrire un procédé d'assemblage d'un ensemble selon le troisième mode de réalisation de l'invention.

La réalisation d'un tel ensemble peut se faire selon les étapes suivantes :

- pliage du séparateur 3 sur le complexe 40,
- assemblage du séparateur plié avec en son sein le complexe (électrode/collecteur/électrode) par laminage ou calandrage pour former un élément 42 d'un seul tenant. Pour faciliter l'assemblage, le séparateur peut être perforé d'orifices 43, comme cela est représenté sur les figures 6A et 6B, ou refondu localement lors de l'assemblage au moyen d'aiguilles chaudes, dans le cas où il est réalisé en un matériau polymère,
- reconstitution d'un empilement en superposant un complexe sans séparateur 41 en alternance avec un complexe avec séparateur 40. Les complexes formant les extrémités de l'empilement sont de préférence des complexes sans séparateur 41 A. Ils sont également monofaces, et forment les bornes de connexion de l'ensemble comme expliqué ci-dessus,
- compactage de l'empilement,
- mise en place de l'empilement dans le logement souple ou dans une enveloppe plastique rigide comprenant un couvercle,
- fermeture sur au moins 2 côtés du logement ou scellage du couvercle. La fermeture partielle est préférentiellement effectuée de sorte que les électrodes ressortent du logement pour permettre de garantir une meilleure étanchéité.

### *Variantes de réalisation d'un ensemble selon l'invention*

On va maintenant décrire des variantes de réalisation de l'invention.

Dans cette invention, on notera que l'ensemble ne comprend pas nécessairement des complexes bifaces (i.e. le complexe comprend un collecteur de courant et deux électrodes opposées de part et d'autre du collecteur). Tous les complexes du module peuvent être monofaces sur un collecteur (i.e. le complexe comprend un collecteur de courant et une électrode sur l'une des faces du collecteur) ou plus avantageusement, au moins certains complexes peuvent être autosupportés (i.e. le complexe comprend uniquement une électrode et ne comprend pas de collecteur de courant) comme décrit, par exemple, dans les brevets FR2871615 et FR2759087. Dans ce cas, les complexes empilés et la densité d'énergie sont accrus par rapport au composant comprenant un collecteur. Cette solution est également économiquement avantageuse, car elle permet de limiter très fortement l'utilisation de collecteur, constituant onéreux dans les supercondensateurs et d'utiliser un même complexe pour des supercondensateurs fonctionnant en milieu organique ou en milieu aqueux pour lesquels les collecteurs habituellement utilisés ne sont pas les mêmes.

Les complexes et les séparateurs peuvent bien entendu être de conception plus simple que ce qui a été décrit, chacun étant plan.

On notera également, comme cela est montré aux figures 7 et 8, qu'un ensemble peut comprendre un premier échantillon de plusieurs complexes 45A à 45E formant première borne de connexion et/ou un deuxième échantillons de plusieurs complexes 46A à 46E formant deuxième borne de connexion, à condition que l'intersection des échantillons soit bien entendu un ensemble vide et que le nombre de complexes dans la réunion des échantillons soit inférieur au nombre total de complexes. Cela revient en fait à placer plusieurs empilements 5A à 5E tels que décrits ci-dessus dans un même logement 6. Il suffit alors de faire ressortir du logement étanche les seuls complexes 45, 46 appartenant aux premier et deuxième échantillons.

On peut alors, comme cela est représenté à la figure 7a placer les empilements de sorte que deux complexes appartenant au même échantillon soient adjacents.

Comme cela est représenté plus clairement sur les figures 7b et 7c (la figure 7c représentant une vue du détail A de la figure 7a), on peut également concevoir les complexes de sorte qu'un seul élément 47 forme deux complexes 46C, 46D constituant chacun une borne de connexion de deux empilements adjacents. Un tel élément 47 comprend un collecteur 48 muni de deux zones extrêmes 48A, 48B sur lesquelles une électrode est déposée, sur une seule face de celui-ci, et d'une zone centrale 48C dépourvue d'électrode. Cet élément est deux fois plus long qu'un complexe formant borne de connexion classique, tel que les complexes 45A, 46E, formant les extrémités de l'ensemble.

Avant d'être placé dans le logement 6, l'élément 47 est replié sur lui-même selon une ligne de pliure 49 s'étendant au milieu de celui-ci, de sorte que la première moitié de l'élément forme un complexe d'extrémité 46C d'un premier empilement 5C et que la seconde moitié de celui-ci forme un complexe d'extrémité 46D d'un empilement adjacent 5D. La zone dépourvue d'électrode fait alors saillie en dehors du logement 6. Pour assurer l'étanchéité de l'ensemble muni d'un tel complexe, il faut toutefois ajouter un matériau fusible 50 entre les deux moitiés du complexe, par exemple lors du thermoscellage de l'enveloppe. Ce matériau est placé sur la face opposée à celle sur laquelle l'électrode a été déposée.

On notera également qu'une feuille de matériau étanche 57 tel que celui formant le logement peut être placée dans celui-ci entre deux empilements. La présence d'une telle feuille est toutefois optionnelle.

Un moyen de simplifier un ensemble comprenant plusieurs empilements est de réaliser un ensemble tel que décrit à la figure 8. Des complexes bifaces 52, 53 sont alors utilisés, formant à la fois le complexe d'extrémité d'un premier empilement, respectivement 5A et 5C pour les complexes 53 et 5B, 5D pour les complexes 52, et le complexe d'extrémité d'un second empilement adjacent, respectivement 5B et 5D pour les complexes 53 et 5C, 5E pour les complexes 52. Le collecteur d'un tel complexe 52, 53 comprend une portion débordante ressortant du logement. Dans ce cas, le logement est scellé sans problématique de fuite. Dans le cas de la figure 8, le premier échantillon est constitué des complexes 45A et 52 et le deuxième échantillon est constitué des complexes 53 et 46E.

Comme cela est représenté à la figure 9, il est également possible, dans tous les modes de réalisation cités, de concevoir l'ensemble de sorte qu'il comprenne au moins une borne de mesure 54 en plus des bornes de connexion 55A, 55B (ici, formées respectivement par chacun des complexes extrêmes de l'empilement). Un complexe n'appartenant ni au premier ni au second échantillon et donc distinct des complexes extrêmes est relié à la borne de mesure. Cela permet d'effectuer des mesures de tension à l'aide d'un voltmètre 56 dans chaque partie de l'empilement, afin de connaitre au moins partiellement la répartition de tension dans celui-ci. Très simplement, cette borne de mesure peut par exemple être créée en ajoutant une portion de collecteur prolongeant un complexe intermédiaire de l'empilement vers l'extérieur. Dans ce cas, la tension peut être aisément mesurée et on peut déterminer s'il existe un vieillissement anticipé ou un défaut au sein de l'empilement.

Dans une variante de réalisation, les épaisseurs des électrodes déposées sur les deux faces du collecteur sont différentes. Dans le cas d'utilisation d'une électrolyte dont le cation est plus volumineux que l'anion (diamètre de l'ion), l'électrode négative sera préférentiellement choisie pour être la plus fine pour permettre de limiter le vieillissement. Il est cependant possible de choisir l'électrode négative plus épaisse en vue d'accroitre la densité d'énergie. Cela est toutefois effectué au détriment du vieillissement.

Dans un autre mode de réalisation, l'ensemble comprend des complexes avec un collecteur et des électrodes de batteries, soit des électrodes réalisées avec des matériaux distincts et formant respectivement cathode et anode de la batterie. Dans ce cas, le collecteur est choisi préférentiellement pour former une barrière aux ions. Une première face du collecteur comprend un type d'électrode (cathode par exemple) et une deuxième face comprend l'électrode de polarité opposée (anode). L'anode peut par exemple être réalisée en Lithium métal ou graphite ou matériau carbone ou composé d'insertion (étain, antimoine, silicium, soufre, etc.) alors que la cathode peut par exemple être réalisée en $LiFePO_4$. Les épaisseurs des deux électrodes peuvent également être différentes. Cela permet d'accroitre considérablement la densité des batteries, comme dans le cas des supercondensateurs décrits précédemment.

***Mesure des caractéristiques d'un supercondensateur comprenant un empilement selon le deuxième mode de réalisation de l'invention***

Les résultats du tableau II en annexe ont été obtenus avec un supercondensateur du type suivant :

- Nombre de feuilles empilées : 22, dont 20 complexes dits « bifaces » - c'est-à-dire comprenant un collecteur de courant et deux électrodes, chaque électrode étant en contact avec une face respective du collecteur de courant - et deux complexes dits « monoface » - c'est-à-dire comprenant un collecteur de courant et une unique électrode sur une face du collecteur de courant - les complexes monofaces constituant le dessus et le dessous de l'élément empilé ;
- Capacité volumique de l'électrode : 30F/cm$^3$

- Dimension d'une feuille : 7 cm x 34 cm.
- Epaisseur des monofaces : 100$\mu$m d'électrode sur collecteur aluminium d'épaisseur 30$\mu$m (épaisseur totale = 130$\mu$m)
- Epaisseur des bifaces : 100$\mu$m d'électrode recto-verso sur collecteur aluminium d'épaisseur 30$\mu$m (épaisseur totale : 230$\mu$m)
- Nombre de séparateurs : 21.
- Epaisseur de séparateur : 25$\mu$m (TF4425 de NKK).
- Volume d'électrode : 2.38cm$^3$.
- Capacité théorique attendue : 2.38cm$^3$ x 30F/cm$^3$/ 21 = 3.4F (volume d'électrode x capacité volumique / nombre de condensateurs empilés (= couches de séparateurs)) Les mesures ont été effectuées à 54V en mode galvanostatique 10A charge/décharge. La tension entre feuilles (c'est-à-dire pour chaque supercondensateur constitué par deux feuilles successives) est de 2.57V.

On constate que la valeur moyenne de la capacité obtenue est très proche de la valeur théorique attendue.

La constante de temps reste inférieure à la seconde, ce qui montre bien le comportement standard du supercondensateur ainsi obtenu.

### *Réalisation d'un module à partir de supercondensateurs selon l'invention :*

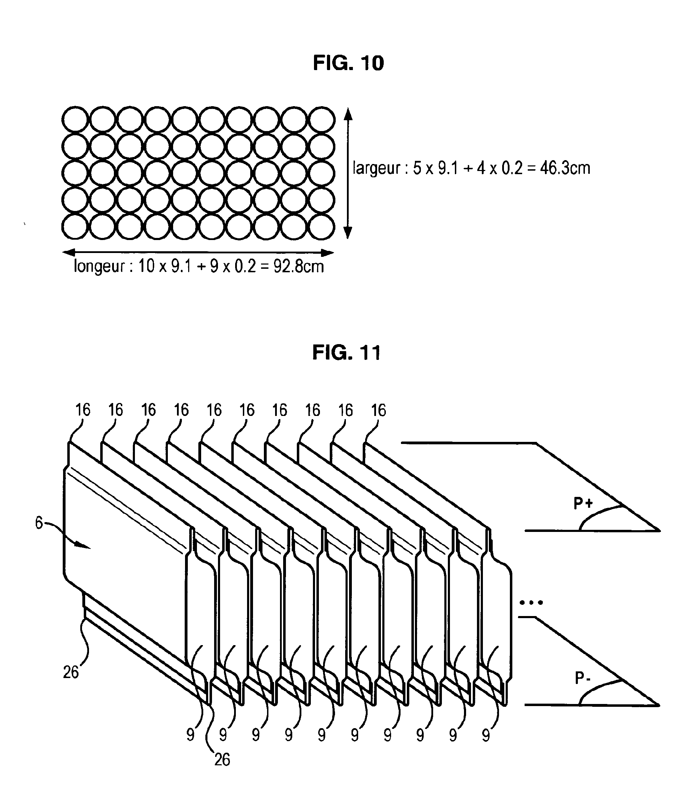

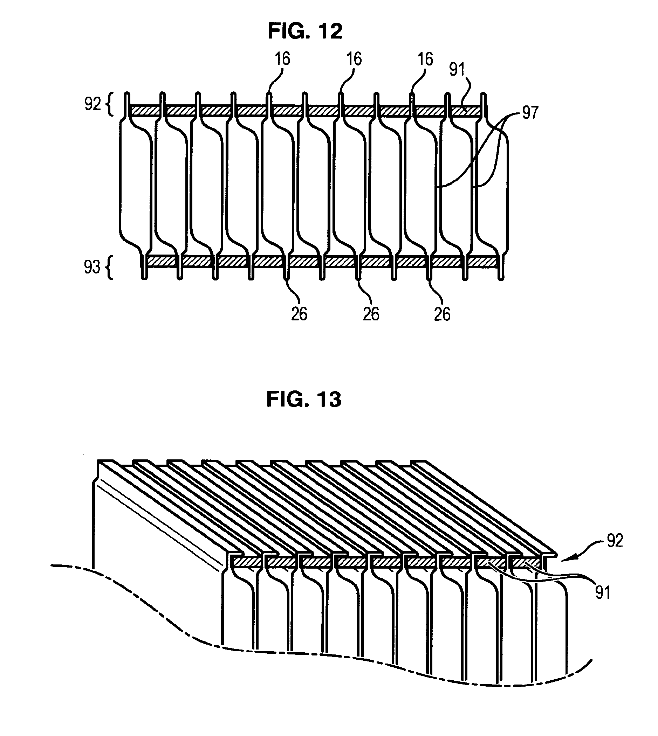

On va maintenant décrire, en référence aux figures 11 à 16, un exemple de module obtenu en connectant électriquement en parallèle une pluralité de supercondensateurs 9 à logement souple.

Chaque supercondensateur 9 est composé d'un empilement 5 comprenant deux bornes de connexion 16, 26.

Les supercondensateurs sont disposés de sorte que :

- les extrémités des bornes de connexion 16 de signe positif des différents supercondensateurs sont contenues dans un premier plan P+,
- les extrémités des bornes de connexion 26 de signe négatif des différents supercondensateurs contenues dans un deuxième plan P-.

Ces deux plans P+ P- s'étendent de part et d'autre des supercondensateurs 9. L'ensemble de ces bornes de connexion peuvent être fixées ensembles mécaniquement en utilisant une colle ou une résine 91 pour former un bloc, comme illustré à la 8.

Les « tranches » 92, 93 de part et d'autre du module ainsi formé sont ensuite rassemblées pour ne former que deux plots de connexion du module. Les tranches 92, 93 peuvent avantageusement avoir une dimension égale à celle des bornes de connexion 16, 26 des supercondensateurs. Cela permet de conduire le courant de manière uniforme (potentiel identique sur l'ensemble du supercondensateur) et également de pouvoir constituer un « radiateur » efficace pour le supercondensateur.

Les tranches 92, 93 peuvent être couchées comme décrit dans le document FR 2 921 195 en vue d'être soudées les unes aux autres comme illustré à la figure 9. Elles peuvent également être assemblées par brasage comme décrit dans le document FR 2 902 938, ou par tout autre procédé permettant d'obtenir une résistance électrique faible.

Pour connecter électriquement les tranches 92, 93, une plaque métallique 94 peut être soudée aux (ou brasée sur les) tranches 92, 93, couchées et assemblées préalablement, couchées et non assemblées préalablement, non couchée et assemblées préalablement ou non couchées et non assemblées préalablement.

Le fait de coucher les tranches 92, 93 et de réaliser un assemblage de la plaque métallique 94 directement sur les tranches couchées permet de réduire la résistance électrique de contact. La plaque métallique 94 ainsi assemblée permet également de dissiper la chaleur vers l'extérieur du module de manière efficace. Chaque plaque 94 peut être réalisée en aluminium, ce qui procure un avantage thermique, et comporter des rainurages pour améliorer la dissipation de la chaleur.

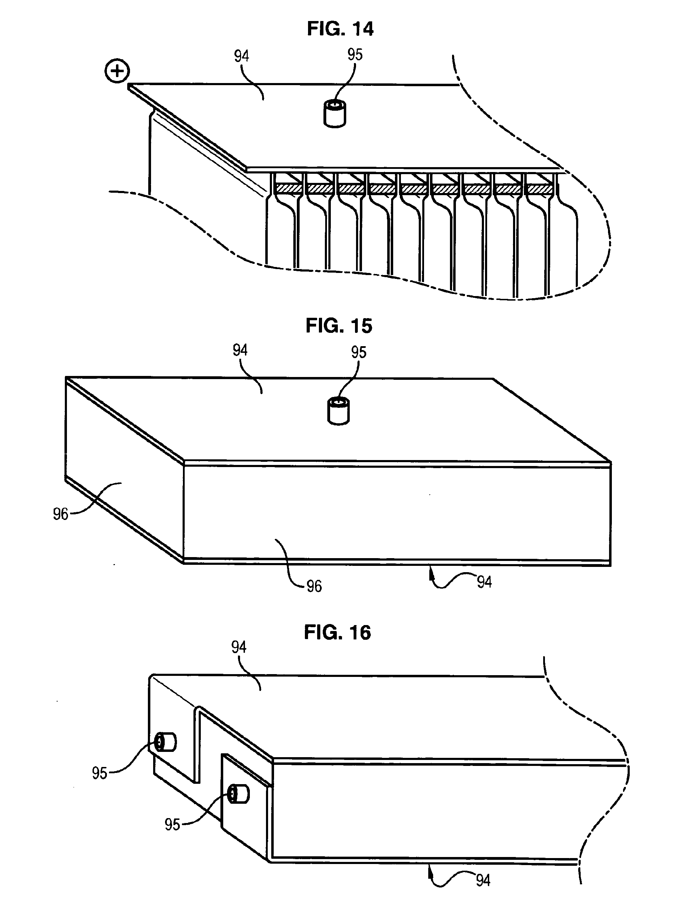

La connexion vers l'application peut se faire via un pion 95 positionné au centre de la plaque 94 pour répartir uniformément le courant, comme illustré à la figure 15. Chaque pion 95 peut également être décentré selon les besoins dimensionnels, voire même être ramené sur le côté du module final, comme illustré à la figure 16.

La verticalisation des supercondensateurs permet de faciliter la dissipation de la chaleur produit lors des charges/décharges du module : les supercondensateurs verticaux jouent ainsi le rôle de *« radiateur »* thermique.

Les supercondensateurs peuvent être accolés les uns aux autres directement. Il est également possible de positionner des interstices 97 entre les supercondensateurs. Ces interstices 97 peuvent être constitués dans un matériau rigide pour renforcer mécaniquement le module. Ces interstices peuvent également être constitués dans un matériau polymère (par exemple de type « *gad pad* ») afin d'améliorer les performances de dissipation thermique.

On peut également surmouler l'ensemble du module formé (comme c'est le cas dans les moteurs électriques, par exemple). Cela permet de se prémunir de fuites tout en rigidifiant le module.

Les flancs 96 du module peuvent être réalisés en matière plastique pour isoler électriquement les deux pôles du module.

L'ensemble du module peut également être recouvert par une gaine isolante ne laissant ressortir que les deux pions 95 de connexion du module afin d'éviter tout problème de sécurité vis-à-vis de l'utilisation ou de l'utilisateur. Cette gaine peut être souple ou peut être réalisée par surmoulage (par immersion, par exemple). De préférence, l'épaisseur de cette gaine est prévu suffisamment fine pour faciliter la dissipation thermique.

On peut également imaginer que les portions débordantes des complexes d'extrémité débordent non pas dans la hauteur du module mais dans la longueur de celui-ci. Dans ce cas, deux flancs opposés peuvent être conducteurs tandis que les autres parois du module sont isolantes.

Dans une autre configuration, l'ensemble des parois du modules est isolant : chaque borne regroupe respectivement les complexes formant respectivement borne positive et négative de chaque ensemble, et traverse de part en part une ou plusieurs parois du module. Dans ce mode de réalisation, il est alors possible de positionner les bornes du module du même côté.

On notera également que, dans le cas où plusieurs empilements sont placés dans un seul logement, un ensemble peut constituer à lui seul un module utilisable pour l'une des applications décrites ci-dessous.

### *Comparaison de démarches de dimensionnement d'un module*

Pour mettre en relief l'intérêt du supercondensateur selon l'invention, on va maintenant comparer les démarches de dimensionnement :

- d'un module utilisant des supercondensateurs cylindriques de l'art antérieur,
- d'un module utilisant des supercondensateurs prismatiques selon l'invention.

On rappelle qu'un intérêt de l'invention est de pouvoir réaliser des supercondensateurs compacts de haute tension.

Le problème à résoudre pour tout fabricant de supercondensateurs et de module est d'adapter, dans un volume donné, l'assemblage de supercondensateurs de capacité unitaire élevée (généralement supérieure à 500F) avec une tension fixée par l'application (généralement très élevée par rapport à la tension unitaire que chaque supercondensateur est capable de supporter) et une énergie utile minimale.

### *Exemple de dimensionnement standard avec des composants cylindriques.*

Supposons les données d'entrée suivantes :

$$U\ max._{application}=120V.\ U\ min._{application}=60V.$$

Energie nécessaire : 200kJ.

La tension de l'application induit un nombre de supercondensateurs nécessaires :

- si la tension nominale de chaque supercondensateur est de 2.5V, alors le nombre de supercondensateurs à monter en série est égal à :

  120V / 2.5 = 48 supercondensateurs montés en série ;

- si la tension nominale de chaque supercondensateur est de 2.73V, alors le nombre de supercondensateurs à monter en série est égal à :

  120V / 2.73 = 44 supercondensateurs en série

- si la tension nominale de chaque supercondensateur est de 3.0V, alors le nombre de supercondensateurs à monter en série est égal à :

  120V / 3.0V = 40 supercondensateurs.

On voit ici tout de suite le problème de choix qui s'impose au fabricant : le fait d'utiliser 44 supercondensateurs cylindriques semble plus avantageux que l'utilisation d'un nombre supérieur (48 supercondensateurs) ; toutefois, l'utilisation de 44 supercondensateurs ne correspond à aucun autre arrangement que 4 rangées de 11 composants, ce qui n'est pas avantageux en termes de dimensionnement volumétrique. Le dimensionnement à base de 40 composants apparait plus compact (8 rangées de 5 composants) mais est particulièrement agressif en terme de vieillissement, vu la tension plus élevée appliquée aux bornes de chaque supercondensateur.

L'énergie nécessaire induit le dimensionnement de chaque supercondensateur :

$$200 \text{ kJ} = \tfrac{1}{2} C ((Umax)^2 - (Umin)^2)$$

$$200\,000 \times 2 /(120^2 - 60^2) = 37.04F$$

Si chaque supercondensateur fonctionne à 2.5V, on obtient une capacité unitaire de 1778 F pour chaque supercondensateur.

Si chaque supercondensateur fonctionne à 2.73V, la capacité est alors de 1630 F.

Si chaque supercondensateur fonctionne à 3.0V, la capacité est alors de 1482 F.

De la même façon, cela engendre le développement de couvercles, de boitiers, etc. pour réaliser ce supercondensateur qui n'existent pas dans la gamme des fabricants. On voit bien que pour chaque application, la capacité du supercondensateur sera différente.

En outre, le fait de faire fonctionner un supercondensateur à 2.5V ou à 2.73V voire même à 3.0V change considérablement les composants de la carte électronique d'équilibrage.

Il n'est donc pas avantageux économiquement de modifier, pour chaque application, la tension unitaire du supercondensateur. Cette tension unitaire est donc une contrainte supplémentaire qui dimensionne directement le module final. De même, l'autodécharge de chaque supercondensateur ne sera pas la même en fonction de la tension unitaire du supercondensateur (perte de tension ΔU plus importante à un temps fixe si la tension unitaire U augmente).

*Exemple de dimensionnement à partir de supercondensateurs de l'art antérieur de 1852 F montés en série et fonctionnant unitairement à une tension de 2.4V*

L'énergie est atteinte pour 50 supercondensateurs. Cela représente un module comportant 5 rangées de 10 supercondensateurs.

On a illustré à la figure 10 un coeur de module - c'est-à-dire l'arrangement de supercondensateurs sans le boîtier du module et sans les cartes électroniques de gestion - obtenu avec un tel dimensionnement.

Le diamètre de chaque supercondensateur est de 6.2 cm et la hauteur avec barrette est égale à 11 cm. La capacité de l'électrode est de 30F/cm$^3$. La laize active (ou couche contenant la matière active) est de 10 cm. L'énergie volumique au niveau du supercondensateur (sans barrette) est de 4.4 Wh/L à 2.4V.

L'espace entre chaque supercondensateur nécessaire pour éliminer les problèmes de court-circuit est de 2 mm de chaque côté d'un supercondensateur. Cet espace est le même entre un supercondensateur et le flanc du module. L'épaisseur des flancs est de 3mm. L'épaisseur des isolants élastomères (supérieur et inférieur) sont de 3mm chacun. L'épaisseur des capots inférieur et supérieur sont également de 3mm.

Le volume du module est donc égale à : 328 mm x 648.mm x 122mm = 25.9 litres. L'énergie volumique de ce module est de 2.15 Wh/L.

Dans le domaine automobile, il est parfois utile, pour des véhicules plus gourmands en énergie, de disposer de module dont l'énergie est plus importante (par exemple jusqu'à 500kJ). Néanmoins, pour des raisons économiques évidentes - choix du convertisseur, des connectiques et des cartes électroniques - , la tension d'utilisation sera la même (maximum de 120V). Cette tension est généralement fixée par le convertisseur, l'électronique de puissance associée et le moteur électrique utilisés.

En réalisant le même type de dimensionnement (2.7V/ supercondensateur, $U_{max}$=120V et $U_{min}$=60V), la supercapacité unitaire vaut 4167 F. Le diamètre de chaque composant est alors de 6.7 cm et la hauteur du composant vaut 17.8 cm. La densité d'énergie du composant est alors de 4.2Wh/L à 2.7V. Le volume du module vaut alors H x L x l (en dm) = 1.9 x 6.29 (rangée de 9 composants) x 3.53 (rangée de 5 composants) = 42.2 L. La densité d'énergie du module vaut alors 3.30Wh/L. Les calculs ci-dessus sont effectués comme expliqué ci-dessus, en prenant en compte les caractéristiques du module réalisé à partir de composants bobinés de capacité unitaire 4167F ci-dessous:

Organisation : 9 rangées de 5 lignes de composants (45 au total) Espace intercomposants : 2mm
Epaisseur de la barrette incluse dans le couvercle

Epaisseur des couvercles : 3mm

Epaisseur des isolants élastomères : 3mm

Dans le cas d'une application fonctionnant en pic à 500A, les deux supercondensateurs reliés aux bornes du module subissent un ampérage très élevé et donc un suréchauffement élevé par rapport aux autres supercondensateurs du module, et donc un vieillissement accéléré.

En outre, l'assemblage de supercondensateurs constitués en module présente un inconvénient majeur : le potentiel de chaque supercondensateur au niveau du capot inférieur (i.e. supérieur respectivement) est différent en tout point. Cela nécessite d'ajouter des matériaux électriquement isolants et résistant à une tension de claquage élevée. Cependant, les matériaux utilisés doivent être thermiquement capables d'évacuer la chaleur ce qui constitue généralement une grande difficulté pour réaliser un module performant. L'invention présente un moyen très intéressant pour s'affranchir de ce problème et donc de limiter fortement l'utilisation de ces matériaux onéreux.

### *Mesure des caractéristiques d'un module de supercondensateurs selon l'invention*

Le tableau III en annexe présente les dimensionnements de modules d'énergie variable (200kJ et 500kJ). L'invention permet de répondre à différentes valeurs d'énergie demandée mais avec un même niveau de tension et avec un seul type d'ensemble de stockage d'énergie dont seul le nombre est variable. Ces ensembles, ou supercapacités, sont reliés électriquement en parallèle pour atteindre le résultat précité.

Comme le montre le résultat concernant le module de 500kJ, à tension identique, le volume est réduit de 28% par rapport à la solution proposé à partir de composants bobinés.

Dans le cas du module de 200kJ, le gain est de 45%.

L'invention montre également, qu'il n'est pas nécessaire d'accroitre la tension pour atteindre une densité d'énergie élevée.

Dans l'état de la technique, comme détaillé plus haut, la réalisation de modules à énergie variable mais à tension identique ne peut être basée sur une unité identique puisqu'à la fois les paramètres de tension et de capacité varient lorsqu'on change le nombre de supercondensateurs de capacité identiques. Cela est préjudiciable économiquement.

Dans l'invention, un ensemble unitaire identique peut être adopté pour obtenir différentes valeurs d'énergie lorsque la tension est identique, comme le montre le tableau III, car la tension de l'ensemble vaut celle de l'application. Cette stratégie simplifie très fortement la réalisation d'assemblage et diminue les coûts de fabrication de tels assemblages, en vue de réaliser un module.

### *Exemple de dimensionnement à partir de supercondensateurs selon l'invention*

Les supercondensateurs selon l'invention sont aptes à fonctionner à la tension de l'application.

Supposons les données d'entrée suivantes, identiques à celles utilisées pour réaliser le module selon l'état de la technique :

$$U\ max_{application} = 120V \ ; \ U\ min_{application} = 60V$$

Energie nécessaire : 200kJ.

La tension de chaque supercondensateur est fonction du nombre de feuilles empilées dans l'élément empilé.

Si on veut limiter drastiquement le vieillissement, on peut faire fonctionner les électrodes en vis-à-vis à une tension maximale de 2.4V.

Avec 51 feuilles (donc 50 condensateurs plans en série) la tension entre électrodes est de 2.40V. On remarque que le nombre de feuilles n'est pas ici un facteur de choix limitant : rien n'empêcherait de n'utiliser que 45 feuilles fonctionnant deux à deux à 2.7V.

La capacité à atteindre est de 37.04F pour le module final. En utilisant un supercondensateur prismatique de capacité unitaire de 4.63 F, il suffit de monter 8 supercondensateurs prismatiques (ou ensembles) en parallèle pour réaliser le module final désiré.

Dimension unitaire de la feuille :

Capacité de l'électrode: $30F/cm^3$

49 feuilles bifaces empilées d'épaisseur de $230\mu m$ et 2 feuilles monofaces d'épaisseur de $130\mu m$, identiques à celles utilisées dans l'exemple précédent (soit au total 51 feuilles).

Une laize de 16 cm est un bon compromis pour limiter la résistance avec un complexe de cette épaisseur. Le volume d'une électrode se calcule donc comme suit :

$$\text{Volume d'une électrode} = L \times 16 \times 0.01 \text{ cm}^3.$$

La capacité théorique à atteindre est de 4.63 Farad, comme expliqué plus haut. Elle se calcule de la façon suivante

Capacité théorique à atteindre = volume d'électrode x capacité volumique/ nombre de supercondensateurs empilés (=nombre de séparateurs) = volume d'électrode x 30 / 50

Le volume d'une couche d'électrode vaut donc 7.712 cm$^3$

La longueur de l'électrode unitaire vaut donc L = 7.712/ (0.01 x 16), soit environ 48.2 cm (ou 482 mm comme indiqué dans le tableau III)

Comme nous pouvons le voir, le dimensionnement de l'électrode est uniquement limité par la longueur de l'électrode, ce qui revient à un dimensionnement de la longueur du logement du module final couvrant l'électrode, c'est-à-dire non pas une pièce mécanique, mais un film déroulable et coupable à la dimension voulue. Il est donc facile d'adapter l'ensemble à l'application souhaitée.

Le module final présentera donc, à minima, les dimensions suivantes (on peut se reporter au tableau III).

Pour chaque ensemble :

Séparateur (nombre : 50) : épaisseur = 25$\mu$m et laize = 17 cm x 49.2 cm
Electrodes bifaces (nombre : 49) : épaisseur = 230 $\mu$m
Electrodes monofaces (nombre : 2) épaisseur = 130 $\mu$m.

Ces électrodes possèdent une dimension active de 16 cm x 48.2 cm et les électrodes monofaces comprennent également un débordant collecteur (formant borne de connexion) de 3 cm, augmentant la largeur du module.

Enveloppe formant le logement d'épaisseur 2mm (donc 4mm au total, comme indiqué dans le tableau III) et de dimension externe: (16 + 2) cm x (48.2 + 2) cm = 18 cm x 50.2 cm

D'où, on obtient pour l'ensemble les dimensions suivantes :

Epaisseur totale : 1.7 cm
Hauteur totale : 19 cm (prenant en compte le débordant collecteur)
Longueur totale: 50.2 cm

La dimension totale du module comprenant 8 ensembles de 4.63F/unité à 120V, tels que décrits ci-dessus, a les dimensions suivantes.

Largeur du module : 14.5 cm
Longueur totale : 51.2 cm (prenant en compte la distance nécessaire pour l'assemblage des ensemble)
Hauteur totale : 19cm.

Cette largeur est atteinte car, entre les ensembles, on ajoute une entretoise permettant d'évacuer la chaleur de manière efficace (matériau thermoconducteur). Chaque entretoise peut mesurer 1 mm d'épaisseur.

On considère aussi l'épaisseur des flancs du module final, qui peut être de 3 mm. Ces flancs sont choisis isolants ou conducteurs en fonction du positionnement des bornes du module, pour ne pas perturber le fonctionnement électrique du supercondensateur.

Le module ne nécessite pas de carte d'équilibrage, les tensions unitaires entre feuilles étant faible (2.4 V) et les ensembles étant montés en parallèle.

On obtient donc un module de volume total: 51.2 x 14.5 x 19 = 14.1 litres

Cela représente donc un gain de 45% en volume par rapport à un coeur de module réalisé à partir de supercondensateurs cylindriques fonctionnant à la même tension.

La densité d'énergie volumique est donc : 200kJ /14.1 L = 3.9 Wh/L, bien que les électrodes fonctionnent unitairement à une tension de 2.4V.

On notera que le courant de chaque ensemble reste faible bien que le courant du module est élevé, car le courant de chaque branche est la division du courant total par le nombre d'ensembles de stockage d'énergie. Dans le cas du module dimensionné ici, l'application nécessite un courant de pic de l'ordre de 500A sur le module. Cela entraine donc un courant unitaire de 67.5 A pour chaque ensemble, ce qui est relativement faible. L'échauffement de chaque supercondensateur sera donc assez limité.

On comprend ici qu'un avantage de l'invention est de dimensionner le module directement via la tension maximale donnée par l'application.

Le niveau de capacité recherchée est ensuite déterminé par l'énergie à fournir. L'énergie est donc directement dépendante de la capacité à fournir (par sommation), ce qui correspond à un assemblage en parallèle de supercondensateurs dont le niveau de tension pré-requis est déjà atteint.

A l'inverse, en réalisant des supercondensateurs de forte valeur de capacité et de tension unitaire faible, il est généralement complexe de répondre au mieux aux contraintes de l'application en raison du niveau de tension à atteindre: il est donc plus simple de réaliser un assemblage d'ensembles de forte tension et de capacité faible que l'inverse.

Un autre intérêt d'un module fonctionnant à haute tension est de pouvoir utiliser un convertisseur DC/DC entre le module de supercondensateurs et l'application (à tension variable) en utilisant des courants plus faible qu'en fonctionnant à basse tension.

En résumé, les avantages du supercondensateur décrit ci-dessus sont les suivants :

- la tension de l'application visée est directement obtenue par le nombre de complexes superposés les uns sur les autres dans un même ensemble;
- l'énergie nécessaire est obtenue en associant en parallèle le nombre d'ensembles nécessaire ;
- la densité d'énergie des modules utilisant des supercondensateurs selon l'invention est supérieure à celle des modules réalisés à partir de supercondensateurs cylindriques de même tension et même capacité ;
- la résistance série du supercondensateur selon l'invention est faible car l'ensemble d'une face d'électrode peut être soudée ou brasée directement sur le couvercle ;
- les reprises de courant du supercondensateur selon l'invention sont réalisables beaucoup plus simplement que pour un supercondensateur prismatique de l'art antérieur, et donc le nombre de pièces utilisées est beaucoup plus faible (prix de fabrication optimisé) ;
- le supercondensateur peut comprendre un unique séparateur au lieu de deux dans les supercondensateurs cylindriques ;
- les polarités du supercondensateur selon l'invention peuvent être disposées de part et d'autre du supercondensateur, contrairement à ce qui est réalisé pour les supercondensateurs prismatiques de l'art antérieur. Cela permet également de mieux dissiper les échauffements et permet de simplifier considérablement l'assemblage en parallèle de ces différents modules ;
- le courant de chaque supercondensateur selon l'invention reste faible, même si le courant du module est élevé, car le courant de chaque branche est la division du courant total par le nombre de composants.

Le lecteur aura compris que de nombreuses modifications peuvent être apportées à l'ensemble de stockage et au module décrit précédemment sans sortir matériellement des nouveaux enseignements et des avantages décrits ici.

Par conséquent, toutes les modifications de ce type sont destinées à être incorporées à l'intérieur de la portée des revendications jointes.

**ANNEXE**

Tableau I

| N° stack | RsDC (mOhms) | Capacité (Farads) | Constante de temps (s) |
|----------|--------------|-------------------|------------------------|
| Cell 1 | 261.4 | 3.10 | 0.81 |
| Cell 2 | 238.0 | 3.21 | 0.76 |
| Cell 3 | 222.0 | 3.44 | 0.76 |
| Cell 4 | 215.0 | 3.43 | 0.74 |
| Cell 5 | 242.4 | 3.21 | 0.78 |
| Cell 6 | 252.1 | 3.25 | 0.82 |
| Cell 7 | 232.4 | 3.40 | 0.79 |
| moyenne | 237.6 | 3.29 | 0.78 |

Tableau II

| Type composant | Cellule Prismatique LS Cable | Module 20 cellules | Cellule Cylindrique Maxwell | Module 20 cellules |
|---|---|---|---|---|
| Capacité unitaire (F) | 3000F | 150F | 3000F | 150F |
| Tension maximale (V) | 2.8V | 56V | 2.7V | 56V |
| Resistance interne (ESR, en mΩ) | 0.36 | Min 7.2 | 0.29 | Min 5.8 |
| Densité d'énergie volumique (à 2.8V, en Wh/L) | 5.03 | Max 5.03/composant | 5.93 | Max 5.93/composant |
| Densité d'énergie massique (à 2.8V, en Wh/kg) | 6.97 | Max 6.97 | 6.87 | Max 5.39 |
| Nombre de pièces dans le supercondensateur | 16 | - | 10 | - |

**Tableau III**

| | Invention | | | | | | | | | | | | Art antérieur | |
|---|---|---|---|---|---|---|---|---|---|---|---|---|---|---|
| besoin énergétique (kJ) | 200 | 500 | 200 | 500 | 200 | 500 | 200 | 500 | 200 | 500 | 200 | 500 | 200 | 500 |
| Umax | 120 | 120 | 120 | 120 | 120 | 120 | 120 | 120 | 120 | 120 | 120 | 120 | 120 | 120 |
| Umin | 60 | 60 | 60 | 60 | 60 | 60 | 60 | 60 | 60 | 60 | 60 | 60 | 60 | 60 |
| capacité cible (F) | 37.04 | 92.59 | 37.04 | 92.59 | 37.04 | 92.59 | 37.04 | 92.59 | 37.04 | 92.59 | 37.04 | 92.59 | 37.04 | 92.59 |
| laize (mm) (i.e. hauteur du ministack) | 160 | 160 | 160 | 160 | 160 | 160 | 160 | 160 | 160 | 160 | 160 | 160 | 160 | 160 |
| longueur (mm) | 530 | 530 | 502 | 502 | 482 | 482 | 463 | 463 | 444 | 444 | 435 | 435 | | |
| nombre de supercondensateurs | 55 | 55 | 52 | 52 | 50 | 50 | 48 | 48 | 46 | 46 | 45 | 45 | 50 | 45 |
| tension entre couche (V) | 2.18 | 2.18 | 2.31 | 2.31 | 2.40 | 2.40 | 2.50 | 2.50 | 2.61 | 2.61 | 2.67 | 2.67 | 2.40 | 2.67 |
| épaisseur complexe (µm) | 100 | 100 | 100 | 100 | 100 | 100 | 100 | 100 | 100 | 100 | 100 | 100 | 100 | 100 |
| épaisseur collecteur (µm) | 30 | 30 | 30 | 30 | 30 | 30 | 30 | 30 | 30 | 30 | 30 | 30 | 30 | 30 |
| nombre de complexe 100/30/100 | 54 | 54 | 51 | 51 | 49 | 49 | 47 | 47 | 45 | 45 | 44 | 44 | | |
| épaisseur séparateur (µm) | 25 | 25 | 25 | 25 | 25 | 25 | 25 | 25 | 25 | 25 | 25 | 25 | 25 | 25 |
| nombre de séparateur | 55 | 55 | 52 | 52 | 50 | 50 | 48 | 48 | 46 | 46 | 45 | 45 | | |
| 1 monofaces 100µm+coll 30µm | 2 | 2 | 2 | 2 | 2 | 2 | 2 | 2 | 2 | 2 | 2 | 2 | | |
| capacité volumique (F/cm3) | 30 | 30 | 30 | 30 | 30 | 30 | 30 | 30 | 30 | 30 | 30 | 30 | 30 | 30 |
| volume d'une couche d'électrode (cm3) | 8.48 | 8.48 | 8.032 | 8.032 | 7.712 | 7.712 | 7.408 | 7.408 | 7.104 | 7.104 | 6.96 | 6.96 | | |
| capacité unitaire (F) | 4.63 | 4.63 | 4.63 | 4.63 | 4.63 | 4.63 | 4.63 | 4.63 | 4.63 | 4.63 | 4.64 | 4.64 | 1852 | 4167 |
| nombre de ministacks nécessaires | 8.0 | 20.0 | 8.0 | 20.0 | 8.0 | 20.0 | 8.0 | 20.0 | 8.0 | 20.0 | 8.0 | 20.0 | | |
| épaisseur enveloppe ministack (mm) | 2 | 2 | 2 | 2 | 2 | 2 | 2 | 2 | 2 | 2 | 2 | 2 | | |
| épaisseur finale (mm) | 18.315 | 18.315 | 17.55 | 17.55 | 17.04 | 17.04 | 16.53 | 16.53 | 16.02 | 16.02 | 15.765 | 15.765 | | |
| débordant laize (mm) | 30 | 30 | 30 | 30 | 30 | 30 | 30 | 30 | 30 | 30 | 30 | 30 | | |
| débordant longueur (mm) | 30 | 30 | 30 | 30 | 30 | 30 | 30 | 30 | 30 | 30 | 30 | 30 | | |
| entretoise entre ministack | 1 | 1 | 1 | 1 | 1 | 1 | 1 | 1 | 1 | 1 | 1 | 1 | | |
| épaisseur flanc (mm) | 3 | 3 | 3 | 3 | 3 | 3 | 3 | 3 | 3 | 3 | 3 | 3 | 3 | 3 |
| hauteur finale du stack | 190 | 190 | 190 | 190 | 190 | 190 | 190 | 190 | 190 | 190 | 190 | 190 | 122 | 190 |
| largeur finale du stack (mm) | 155.7 | 387.6 | 149.3 | 371.7 | 145.4 | 362.0 | 141.2 | 351.6 | 137.1 | 341.1 | 134.8 | 335.6 | 328.0 | 347.0 |
| longueur finale du stack | 560 | 560 | 532 | 532 | 512 | 512 | 493 | 493 | 474 | 474 | 465 | 465 | 648 | 623 |
| volume stack final (L) | 16.6 | 41.2 | 15.1 | 37.6 | 14.1 | 35.2 | 13.2 | 32.9 | 12.3 | 30.7 | 11.9 | 29.6 | 25.9 | 41.1 |
| Energie volumique (Wh/L) | 3.35 | 3.37 | 3.68 | 3.70 | 3.93 | 3.94 | 4.20 | 4.22 | 4.50 | 4.52 | 4.66 | 4.68 | 2.14 | 3.38 |
| Longueur électrode Laize 160 (m) | 233.4 | 583.5 | 208.6 | 521.6 | 192.9 | 482.3 | 177.8 | 444.4 | 163.3 | 408.2 | 156.3 | 390.6 | | |

EP 2 663 984 B1

18

**Revendications**

1. Ensemble de stockage d'énergie électrique comprenant :

  - au moins trois complexes (1, 1', 2, 2' ; 40, 41 ; 45A -45E, 46A - 46E ; 52, 53) empilés, comprenant chacun au moins une électrode (12, 13 ; 22, 23),
  - au moins un séparateur (3, 3', 3") agencé de sorte que ledit au moins un séparateur soit disposé entre chaque paire de complexes adjacents,
  - deux bornes de connexion pour relier électriquement l'ensemble à un générateur de tension, un premier échantillon de complexes (1'; 45A -45E, 52) étant relié électriquement à ou formant une des deux bornes et un deuxième échantillon de complexes (2' ; 46A-46E, 53) étant relié électriquement à ou formant l'autre des deux bornes, **caractérisé en ce que** les deux échantillons sont choisis de sorte que le nombre de complexes appartenant à la réunion des deux échantillons est inférieur au nombre total de complexes et que l'intersection des deux échantillons est un ensemble vide.

2. Ensemble selon la revendication précédente, dans lequel chacun des complexes (1', 2' ; 45A, 46E) situés à une extrémité de l'empilement (5) est relié à ou forme une des bornes de connexion, chacun étant notamment relié à ou formant une borne de connexion distincte.

3. Ensemble de stockage d'énergie selon l'une des revendications précédentes, lequel comprend au moins un complexe incluant un collecteur de courant (11, 21) et deux électrodes opposées (12, 13 et 22, 23) de part et d'autre du collecteur de courant (11, 21).

4. Ensemble selon la revendication précédente, dans lequel l'une des deux électrodes présente une épaisseur plus importante que l'autre des électrodes.

5. Ensemble selon l'une quelconque des revendications 3 et 4, dans lequel les deux électrodes présentent une composition distincte.

6. Ensemble selon l'une des revendications 1 et 2, dans lequel au moins un, de préférence chaque, complexe (1') situé à une extrémité de l'empilement (5) est constitué d'un collecteur de courant (11) et d'une unique électrode (13) sur sa face en regard du reste de l'empilement (5).

7. Ensemble selon l'une quelconque des revendications précédentes, dans lequel :

  - le séparateur (3) s'étend en accordéon et comprend au moins trois pans (34), deux pans adjacents (34) étant reliés au niveau d'une ligne de pliure (35) pour former un pli présentant un côté concave et un côté convexe,
  - au moins un des complexes formant un premier complexe (1) s'étendant en chevron et étant positionné sur une première face (31) du séparateur (3), chaque premier complexe (1) étant plié le long d'une ligne de pliure (15) et étant disposé sur un côté convexe respectif de la première face (31) du séparateur (3) de sorte que la ligne de pliure (15) de chaque premier complexe (1) coïncide avec une ligne de pliure (35) respective du séparateur (3),
  - au moins un autre des complexes formant un deuxième complexe (2) s'étendant en chevron et étant positionné sur une deuxième face (32) du séparateur (3), chaque deuxième complexe (2) étant plié le long d'une ligne de pliure (25) et étant disposé sur un côté convexe respectif de la deuxième face (32) du séparateur (3) de sorte que la ligne de pliure (25) de chaque deuxième complexe (2) coïncide avec une ligne de pliure (35) respective du séparateur (3).

8. Ensemble de stockage d'énergie électrique selon la revendication précédente, lequel comprend :

  - une pluralité de premiers complexes (1) sur la première face (31) du séparateur (3), les premiers complexes étant positionnés un côté convexe sur deux, et
  - une pluralité de deuxièmes complexe (2) sur la deuxième face (32) du séparateur (3), les deuxièmes complexes (2) étant positionnés un côté convexe sur deux.

9. Ensemble selon l'une des revendications 7 et 8, dans lequel les lignes de pliure (34) du séparateur (3) forment les côtés de l'empilement (5), un pan (16) d'un premier complexe (1') formant le dessus de l'empilement(5) et un pan (26) d'un deuxième complexe (2') formant le dessous de l'empilement (5).

**10.** Ensemble selon l'une des revendications précédentes, comprenant au moins une borne de mesure (54) pour mesurer la tension entre une borne de connexion (54A, 54B) et la borne de mesure, un complexe n'appartenant ni au premier ni au deuxième échantillon étant relié à ou formant la borne de mesure.

**11.** Ensemble selon l'une des revendications précédentes, comprenant en outre un logement (6) destiné à recevoir l'empilement, et deux couvercles (7, 8) destinés à coiffer le logement (6) et formant bornes de connexion de l'ensemble, le complexe (1') situé à une extrémité de l'empilement appartenant au premier échantillon et étant relié électriquement au premier couvercle (7), de préférence sur toute sa surface, et le complexe (1') situé à l'autre extrémité de l'empilement appartenant au deuxième échantillon et étant relié électriquement au deuxième couvercle (8), de préférence sur toute sa surface.

**12.** Ensemble de stockage d'énergie selon l'une des revendications précédentes, dans lequel le logement (6) est réalisé dans un matériau souple, les complexes appartenant aux premier et deuxième échantillons comprenant une portion (16, 26), constituée notamment par une portion du collecteur, s'étendant à l'extérieur du logement souple, de sorte que les portions des complexes d'un même échantillon forment une borne de connexion de l'ensemble.

**13.** Ensemble selon l'une des revendications précédentes dans lequel au moins un séparateur (3) est d'un seul tenant avec un complexe (40), de préférence un séparateur plié est d'un seul tenant avec un complexe de façon à recouvrir les deux faces opposées de ce complexe.

**14.** Ensemble selon l'une des revendications précédentes, comprenant une électrolyte organique, telle que le tétraéthylammonium difluoromono[1,2-oxalato(2-)-o,o']borat(1-), (ou TEABF$_2$Ox), le nombre de complexes et la répartition des complexes des premier et deuxième échantillons étant choisis de sorte que la tension locale entre toute paire de complexes adjacents de l'ensemble soit inférieure à 6V, de préférence 3V.

**15.** Ensemble selon l'une des revendications 1 à 13, comprenant une électrolyte aqueuse, telle que la potasse, la soude, l'acide sulfurique, le nitrate de sodium, le sulfate de sodium, le nitrate de lithium, le sulfate de lithium, le nombre de complexes et la répartition des complexes des premier et deuxième échantillons étant choisis de sorte que la tension entre toute paire de complexes adjacents de l'ensemble soit inférieure à 2V, de préférence 1V.

**16.** Module **caractérisé en ce qu'**il comprend un boîtier dans lequel est disposé au moins un ensemble de stockage d'énergie électrique selon l'une des revendications précédentes.

**17.** Module selon la revendication précédente, comprenant une pluralité d'ensembles (9), lesdits ensembles étant reliés électriquement en parallèle.

**18.** Module selon la revendication précédente, dans lequel chaque ensemble comprend des première et deuxième bornes de connexion (16, 26) débordant d'un logement souple (6) contenant un empilement (5), les ensembles étant superposés et fixés ensemble pour former un bloc, les ensembles étant agencés de sorte que les premières bornes de connexion (16) soient reliées électriquement ensemble, notamment par l'intermédiaire d'une première plaque métallique (94), et les deuxièmes bornes de connexion (26) soient reliées électriquement ensemble, notamment par l'intermédiaire d'une deuxième plaque métallique (94).

**19.** Module selon la revendication précédente, dans lequel les bornes de connexion (16, 26) des ensembles (9) sont couchées et assemblées directement sur les plaques métalliques (94).

**20.** Module selon l'une des revendications 18 ou 19, dans lequel les plaques métalliques (94) comprennent des rainures.

**21.** Module selon l'une des revendications 18 à 20, dans lequel chaque plaque métallique comprend un pion, positionné de préférence au centre de la plaque, les pions permettant de connecter électriquement le module à un organe électrique externe.

**22.** Module selon la revendication 18 à 21, lequel comprend en outre au moins un interstice (97) disposé entre deux ensembles adjacents.

**Patentansprüche**

1.  Anordnung zur Speicherung elektrischer Energie, die umfasst:

    - mindestens drei gestapelte Komplexe (1, 1', 2, 2'; 40, 41; 45A-45E, 46A-46E; 52, 53), die jeweils mindestens eine Elektrode (12, 13; 22, 23) umfassen,
    - mindestens einen Separator (3, 3', 3"), der derart ausgebildet ist, dass der mindestens eine Separator zwischen jedem Paar benachbarter Komplexe angeordnet ist,
    - zwei Anschlussklemmen, um die Anordnung mit einem Spannungsgenerator elektrisch zu verbinden, wobei ein erstes Komplexmuster (1'; 45A-45E, 52) mit einer der zwei Klemmen elektrisch verbunden ist oder diese bildet und ein zweites Komplexmuster (2'; 46A-46E, 53) mit der anderen der zwei Klemmen elektrisch verbunden ist oder diese bildet, **dadurch gekennzeichnet, dass** die zwei Muster derart gewählt sind, dass die Anzahl der Komplexe, die zur Verbindung der zwei Muster gehört, kleiner als die Gesamtanzahl der Komplexe ist und dass der Schnittpunkt der zwei Muster eine leere Anordnung ist.

2.  Anordnung nach vorangehendem Anspruch, wobei jeder der Komplexe (1', 2'; 45A, 46E), der sich an einem Ende des Stapels (5) befindet, mit einer der Anschlussklemmen verbunden ist oder diese bildet, wobei jeder insbesondere mit einer unterschiedlichen Anschlussklemme verbunden ist oder diese bildet.

3.  Anordnung zur Speicherung von Energie nach einem der vorangehenden Ansprüche, die mindestens einen Komplex umfasst, der einen Stromsammler (11, 21) und zwei entgegengesetzte Elektroden (12, 13 und 22, 23) auf der einen und der anderen Seite des Stromsammlers (11, 21) einschließt.

4.  Anordnung nach vorangehendem Anspruch, wobei die eine der zwei Elektroden eine größere Dicke als die andere der Elektroden aufweist.

5.  Anordnung nach einem der Ansprüche 3 und 4, wobei die zwei Elektroden eine unterschiedliche Zusammensetzung aufweisen.

6.  Anordnung nach einem der Ansprüche 1 und 2, wobei mindestens ein, vorzugsweise jeder, Komplex (1'), der sich an einem Ende des Stapels (5) befindet, aus einem Stromsammler (11) und einer einzigen Elektrode (13) auf seiner Seite gegenüber dem Rest des Stapels (5) gebildet ist.

7.  Anordnung nach einem der vorangehenden Ansprüche, wobei :

    - sich der Separator (3) akkordeonförmig erstreckt und mindestens drei Bahnen (34) umfasst, wobei zwei benachbarte Bahnen (34) im Bereich einer Faltlinie (35) verbunden sind, um eine Falte zu bilden, die eine konkave Seite und eine konvexe Seite aufweist,
    - mindestens einer der Komplexe, der einen ersten Komplex (1) bildet, sich im Zickzack erstreckt und auf einer ersten Fläche (31) des Separators (3) positioniert ist, wobei jeder erste Komplex (1) entlang einer Faltlinie (15) gefaltet ist und auf einer jeweiligen konvexen Seite der ersten Fläche (31) des Separators (3) derart angeordnet ist, dass die Faltlinie (15) jedes ersten Komplexes (1) mit einer jeweiligen Faltlinie (35) des Separators (3) zusammenfällt,
    - mindestens ein anderer der Komplexe, der einen zweiten Komplex (2) bildet, sich im Zickzack erstreckt und auf einer zweiten Fläche (32) des Separators (3) positioniert ist, wobei jeder zweite Komplex (2) entlang einer Faltlinie (25) gefaltet ist und auf einer jeweiligen konvexen Seite der zweiten Fläche (32) des Separators (3) derart angeordnet ist, dass die Faltlinie (25) jedes zweiten Komplexes (2) mit einer jeweiligen Faltlinie (35) des Separators (3) zusammenfällt.

8.  Anordnung zur Speicherung elektrischer Energie nach vorangehendem Anspruch, die umfasst:

    - eine Vielzahl erster Komplexe (1) auf der ersten Fläche (31) des Separators (3), wobei die ersten Komplexe auf jeder zweiten konvexen Seite positioniert sind, und
    - eine Vielzahl zweiter Komplexe (2) auf der zweiten Fläche (32) des Separators (3), wobei die zweiten Komplexe (2) auf jeder zweiten konvexen Seite positioniert sind.

9.  Anordnung nach einem der Ansprüche 7 und 8, wobei die Faltlinien (34) des Separators (3) die Seiten des Stapels (5) bilden, wobei eine Bahn (16) eines ersten Komplexes (1') die Oberseite des Stapels (5) und eine Bahn (26) eines zweiten Komplexes (2') die Unterseite des Stapels (5) bildet.

10. Anordnung nach einem der vorangehenden Ansprüche, die mindestens eine Messklemme (54) umfasst, um die Spannung zwischen einer Anschlussklemme (54A, 54B) und der Messklemme zu messen, wobei ein Komplex, der weder zum ersten noch zum zweiten Muster gehört, mit der Messklemme verbunden ist oder diese bildet.

11. Anordnung nach einem der vorangehenden Ansprüche, die ferner eine Aufnahme (6), die zum Empfang des Stapels bestimmt ist, und zwei Deckel (7, 8), die zum Abdecken der Aufnahme (6) bestimmt sind und die Klemmen der Anordnung bilden, umfasst, wobei der Komplex (1'), der sich an einem Ende des Stapels befindet, zum ersten Muster gehört und mit dem ersten Deckel (7), vorzugsweise über seine gesamte Oberfläche, elektrisch verbunden ist, und der Komplex (1'), der sich am anderen Ende des Stapels befindet, zum zweiten Muster gehört und mit dem zweiten Deckel (8), vorzugsweise über seine gesamte Oberfläche, elektrisch verbunden ist.

12. Anordnung zur Speicherung von Energie nach einem der vorangehenden Ansprüche, wobei die Aufnahme (6) aus einem elastischen Material hergestellt ist, wobei die Komplexe, die zum ersten und zweiten Muster gehören, einen Abschnitt (16, 26) umfassen, der vor allem von einem Abschnitt des Sammlers gebildet ist, der sich außerhalb der elastischen Aufnahme derart erstreckt, dass die Abschnitte der Komplexe eines selben Musters eine Anschlussklemme der Anordnung bilden.

13. Anordnung nach einem der vorangehenden Ansprüche wobei mindestens ein Separator (3) in einem Stück mit einem Komplex (40) ist, vorzugsweise ein gefalteter Separator in einem Stück mit einem Komplex derart ist, dass die zwei gegenüberliegenden Flächen dieses Komplexes bedeckt sind.

14. Anordnung nach einem der vorangehenden Ansprüche, die einen organischen Elektrolyten wie das Tetraethylammoniumdifluormono[1,2-oxalato(2-)-o,o']borat(1-) (oder TEABF$_2$Ox) umfasst, wobei die Anzahl von Komplexen und die Verteilung der Komplexe des ersten und zweiten Musters derart gewählt sind, dass die lokale Spannung zwischen jedem Paar benachbarter Komplexe der Anordnung kleiner als 6 V, vorzugsweise 3 V, ist.

15. Anordnung nach einem der Ansprüche 1 bis 13, die einen wässrigen Elektrolyten wie das Kaliumcarbonat, das Natriumcarbonat, die Schwefelsäure, das Natriumnitrat, das Natriumsulfat, das Lithiumnitrat, das Lithiumsulfat umfasst, wobei die Anzahl von Komplexen und die Verteilung der Komplexe des ersten und zweiten Musters derart gewählt sind, dass die Spannung zwischen jedem Paar benachbarter Komplexe der Anordnung kleiner als 2 V, vorzugsweise 1 V, ist.

16. Modul, **dadurch gekennzeichnet, dass** es ein Gehäuse umfasst, in dem mindestens eine Anordnung zur Speicherung elektrischer Energie nach einem der vorangehenden Ansprüche angeordnet ist.

17. Modul nach vorangehendem Anspruch, das eine Vielzahl von Anordnungen (9) umfasst, wobei die Anordnungen elektrisch parallel verbunden sind.

18. Modul nach vorangehendem Anspruch, wobei jede Anordnung eine erste und zweite Anschlussklemme (16, 26) umfasst, die über eine elastische Aufnahme (6) übersteht, die einen Stapel (5) enthält, wobei die Anordnungen übereinanderliegen und zusammen fixiert sind, um einen Block zu bilden, wobei die Anordnungen derart ausgebildet sind, dass die ersten Anschlussklemmen (16) gemeinsam elektrisch verbunden sind, vor allem über eine erste Metallplatte (94), und die zweiten Klemmen (26) gemeinsam elektrisch verbunden sind, vor allem über eine zweite Metallplatte (94).

19. Modul nach vorangehendem Anspruch, wobei die Anschlussklemmen (16, 26) der Anordnungen (9) direkt auf den Metallplatten (94) liegen und angeschlossen sind.

20. Modul nach einem der Ansprüche 18 oder 19, wobei die Metallplatten (94) Rillen umfassen.

21. Module nach einem der Ansprüche 18 bis 20, wobei jede Metallplatte einen Dorn umfasst, der vorzugsweise in der Mitte der Platte angeordnet ist, wobei die Dorne erlauben, das Modul an ein äußeres elektrisches Organ elektrisch anzuschließen.

22. Modul nach Anspruch 18 bis 21, das ferner mindestens einen Spalt (97) umfasst, der zwischen zwei benachbarten Anordnungen angeordnet ist.

**Claims**

1.  An electrical energy storage assembly comprising:

    - at least three stacked complexes (1, 1', 2, 2'; 40, 41; 45A-45E, 46A-46E; 52, 53), each comprising at least one electrode (12, 13; 22, 23);
    - at least one separator (3, 3', 3") arranged so that said at least one separator is arranged between each pair of adjacent complexes;
    - two connection terminals to connect the assembly electrically to a voltage generator, a first sample of complexes (1'; 45A-45E, 52) being electrically connected to or forming one of the two terminals, and a second sample of complexes (2'; 46A-46E, 53) being electrically connected to or forming the other of the two terminals, **characterized in that** the two samples are chosen so that the number of complexes belonging to the combining of the two samples is lower than the total number of complexes and so that the intersection of the two samples is a void assembly.

2.  The assembly according to the preceding claim wherein each of the complexes (1', 2'; 45A, 46E) located at one end of the stack (5) is connected to or forms one of the connection terminals, each particularly being connected to or forming a separate connection terminal.

3.  The energy storage assembly according to one of the preceding claims which comprises at least one complex including a current collector (11, 21) and two opposite electrodes (12, 13 and 22, 23) either side of the current collector (11,21).

4.  The assembly according to the preceding claim wherein one of the two electrodes is of greater thickness than the other of the electrodes.

5.  The assembly according to any of claims 3 and 4 wherein the two electrodes are of different composition.

6.  The assembly according to one of claims 1 and 2 wherein at least one, preferably each complex (1') located at one end of the stack (5) is formed of a current collector (11) and of a single electrode (13) on its surface facing the remainder of the stack (5).

7.  The assembly according to one of the preceding claims wherein:

    - the separator (3) extends accordion-wise and comprises at least three sections (34), two adjacent sections (34) being connected at a fold-line (35) to form a fold having a concave side and a convex side;
    - at least one of the complexes forming a first complex (1) extending chevron-wise and being positioned on a first face (31) of the separator (3), each first complex (1) being folded along a fold-line (15) and being arranged on a respective convex side of the first face (31) of the separator (3), so that the fold-line (15) of each first complex (1) coincides with a respective fold-line (35) of the separator (3);
    - at least one other of the complexes forming a second complex (2) extending chevron-wise and being positioned on a second face (32) of the separator (3), each second complex (2) being folded along a fold-line (25) and being arranged on a respective convex side of the second face (32) of the separator (3) so that the fold-line (25) of each second complex (2) coincides with a respective fold-line (35) of the separator (3).

8.  The electrical energy storage assembly according to the preceding claim which comprises:

    - a plurality of first complexes (1) on the first face (31) of the separator (3), the first complexes being positioned on every other convex side; and
    - a plurality of second complexes (2) on the second face (32) of the separator (3), the second complexes (2) being positioned on every other convex side.

9.  The assembly according to one of claims 7 and 8 wherein the fold-lines (34) of the separator (3) form the sides of the stack (5), one section (16) of a first complex (1') forming the top of the stack (5) and one section (26) of a second complex (2') forming the underside of the stack (5).

10. The assembly according to one of the preceding claims, comprising at least one measuring terminal (54) to measure the voltage between a connection terminal (54A, 54B) and the measuring terminal, a complex belonging neither to the first nor to the second sample being connected to or forming the measuring terminal.

11. The assembly according to one of the preceding claims further comprising a housing (6) intended to receive the stack, and two lids (7, 8) intended to cap the housing (6) and forming connection terminals of the assembly, the complex (1') located at one end of the stack belonging to the first sample and being electrically connected to the first lid (7), preferably over the entire surface thereof, and the complex (1') located at the other end of the stack belonging to the second sample and being electrically connected to the second lid (8), preferably over the entire surface thereof.

12. An energy storage assembly according to one of the preceding claims wherein the housing (6) is made in a flexible material, the complexes belonging to the first and second samples comprising a portion (16, 26) formed in particular by a portion of the collector extending outside the flexible housing, so that the portions of the complexes of one same sample form a connection terminal of the assembly.

13. The assembly according to one of the preceding claims wherein at least one separator (3) is in one piece with a complex (40), preferably a folded separator is in one piece with a complex so as to cover the two opposite surfaces of this complex.

14. The assembly according to one of the preceding claims, comprising an organic electrolyte such as tetraethylammonium difluoromono[1,2-oxalato(2-)-o,o']borat(1-), (or TEABF$_2$Ox), the number of complexes and the distribution of the complexes of the first and second samples being chosen so that the local voltage between every pair of adjacent complexes of the assembly is less than 6 V, preferably 3 V.

15. The assembly according to one of claims 1 to 13 comprising an aqueous electrolyte such as potash, sodium hydroxide, sulfuric acid, sodium nitrate, sodium sulfate, lithium nitrate, lithium sulfate, the number of complexes and the distribution of the complexes of the first and second samples being chosen so that the voltage between every pair of adjacent complexes of the assembly is less than 2 V, preferably 1 V.

16. A module **characterized in that** it comprises a casing in which there is arranged at least one electrical energy storage assembly according to one of the preceding claims.

17. The module according to the preceding claim comprising a plurality of assemblies (9), said assembles being electrically connected in parallel.

18. The module according to the preceding claim wherein each assembly comprises first and second connection terminals (16, 26) projecting from a flexible housing (6) containing a stack (5), the assemblies being superimposed and secured together to form a block, the assemblies being arranged so that the first connection terminals (16) are electrically connected together, in particular via a first metal plate (94), and the second connection terminals (26) are electrically connected together in particular via a second metal plate (94).

19. The module according to the preceding claim wherein the connection terminals (16, 26) of the assemblies (9) are laid flat and assembled directly onto the metal plates (94).

20. The module according to one of claims 18 or 19 wherein the metal plates (94) comprise grooves.

21. The module according to one of claims 18 to 20 wherein each metal plate comprises a pin preferably positioned in the centre of the plate, the pins allowing the electrical connection of the module to an external electrical member.

22. The module according to claims 18 to 21 which further comprises at least one interstice (97) provided between two adjacent assemblies.

# FIG. 1

# FIG. 2

## FIG. 3

## FIG. 4a

## FIG. 4b

## FIG. 5

## FIG. 6A

## FIG. 6B

## FIG. 7A

## FIG. 7B

## FIG. 7C

## FIG. 8

## FIG. 9

## FIG. 10

largeur : 5 x 9.1 + 4 x 0.2 = 46.3cm

longeur : 10 x 9.1 + 9 x 0.2 = 92.8cm

## FIG. 11

## FIG. 12

## FIG. 13

**FIG. 14**

**FIG. 15**

**FIG. 16**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1964138 A
- US 2008166637 A
- US 2010220426 A
- US 4092464 A

- FR 2871615
- FR 2759087
- FR 2921195
- FR 2902938

**Littérature non-brevet citée dans la description**

- **MAKOTO UE ; KAZUHIKO ; IDA ; SHOICHIRO ; MORI.** Electrochemical Properties of Organic Liquid Electrolytes Based on Quaternary Onium Salts for Electrical Double-Layer Capacitors''. *J. Electrochem. Soc.,* 1994, vol. 141
- **B.E. CONWAY ; R.E. VERALL ; J.E. DESNOYERS.** *Trans. Faraday Soc.,* 1966, vol. 62, 2738-2744

- **R.A. ROBINSON ; R.H. STOKES.** Electrolyte Solutions. Butterworths, 1965
- **W.G. PELL ; B.E. CONWAY ; N. MARINCIC.** *J. Electroanal. Chemistry,* 2000, vol. 491, 9-21
- **M. ENDO ; Y. J. KIM ; H. OHTA ; K. ISHII ; T. INOUE ; T. HAYASHI ; Y. NISHIMURA ; T. MAEDA ; M. S. DRESSELHAUS.** *Carbon,* 2002, vol. 40, 2613-2626